# EUROPÄISCHE PATENTSCHRIFT

(11) **EP 1 180 413 B1**
(45) Veröffentlichungstag und Bekanntmachung des Hinweises auf die Patenterteilung: **04.05.2005**
(21) Anmeldenummer: 01124486.0
(22) Anmeldetag: 09.02.1996
(51) Int. Cl.: B23Q 1/01, B23Q 39/04

(54) **Mehrspindelwerkzeugmaschine**
Multi-spindle machine tool
Machine-outil multibroche

(30) Priorität: 10.02.1995 DE 19504369
(43) Veröffentlichungstag der Anmeldung: 20.02.2002
(62) Teilanmeldung aus: 96101881.9
(73) Patentinhaber: Index-Werke GmbH & Co. KG Hahn & Tessky, 73730 Esslingen (DE)
(72) Erfinder: Link, Helmut, 73733 Aichwald (DE)
(74) Vertreter: HOEGER, STELLRECHT & PARTNER Patentanwälte

(56) Entgegenhaltungen:
- DE-A- 3 416 660
- US-A- 1 671 354
- US-A- 3 792 633

## Beschreibung

Die Erfindung betrifft eine Mehrspindelwerkzeugmaschine umfassend ein sich über einer Grundfläche erhebendes Maschinengestell, einen am Maschinengestell um eine die Grundfläche durchstoßende und sich von dieser weg erstreckende Drehachse drehbar gelagerten Spindelträger, mehrere an dem Spindelträger um die Drehachse herum jeweils einzeln in einzelnen Spindelpositionen hängend angeordnete Werkstückspindeln, deren Spindelachsen die Grundfläche durchstoßen und sich von dieser weg erstrecken und die durch Drehen des Spindelträgers um die Drehachse in verschiedenen Drehstellungen positionierbar sind, einen Arbeitsraum, in welchem die Werkstückspindeln mit ihren Werkstückspanneinrichtungen hineinragen, und ein in dem Arbeitsraum angeordnetes Werkzeug, mit welchem ein in der Werkstückspanneinrichtung eines der Werkstückspindeln gespanntes Werkstück bearbeitbar ist. (Siehe, z.B., US-3,792,633-A).

Eine derartige Werkzeugmaschine ist beispielsweise auch aus dem Artikel "Konzeption handhabungsgerechter Drehmaschinen, die Automatisierung verändert das Bild der Werkzeugmaschine" von Prof. Eversheim und Dipl. Ing. Päffekhofen, veröffentlicht in der Zeitschrift "Industrieanzeiger" Nr. 19 vom 19. März 1983, bekannt. In diesem Artikel wird in Bild 4 die Anordnung zweier hängender Spindeln an einer Spindeltrommel beschrieben, die ihrerseits drehbar gegenüber einem umgekehrt U-förmigen Maschinengestell gelagert ist, wobei an einem Seitenträger des Maschinengestells ein in zwei Achsrichtungen bewegbarer Werkzeugschlitten vorgesehen ist.

Ferner ist noch im Zusammenhang mit dieser Lösung offenbart, den Einsatz von Handhabungseinrichtungen durch eine Verfahrbarkeit der Arbeitsspindeln in axialer Richtung zu ersetzen.

Eine Drehmaschine mit einer längs ihrer Spindelachse verfahrbaren einzelnen hängenden Spindel ist darüber hinaus aus der DE-C 34 16 660 bekannt oder auch aus der EP-B 0 215 209. Die in den beiden letztgenannten Druckschriften offenbarten Einspindelmaschinen haben eine numerisch gesteuerte in der Z-Achsen-Richtung verschiebbare Spindel, die sowohl dazu dient, Werkstücke zu greifen als auch die Werkstücke relativ zu einem feststehenden Werkzeug bei der Bearbeitung zu führen.

Der Erfindung liegt daher die Aufgabe zugrunde, eine Mehrspindelwerkzeugmaschine der gattungsgemäßen Art derart zu verbessern, daß diese möglichst vorteilhaft arbeitet.

Diese Aufgabe wird durch eine Mehrspindelwerkzeugmaschine gemäss Anspurch 1 gelöst.

Um eine möglichst hohe Genauigkeit bei der Bearbeitung zu erzielen ist es vorteilhaft, wenn die Werkstückspindeln gegenüber dem Spindelträger nicht in mehreren Achsen bewegbar sind, sondern ausschließlich in Richtung ihrer Spindelachse.

Es ist besonders vorteilhaft, wenn jeder Werkstückspindel ein eigener Linearantrieb zur Bewegung derselben in Richtung der Spindelachse zugeordnet ist.

Beispielsweise wäre es bei einem Spindelträger, dessen Werkstückspindeln in unterschiedlichen Spindelstationen positionierbar sind, möglich, stationär am Maschinengestell jeder Spindelstation einen Linearantrieb zuzuordnen und die Werkstückspindeln in jeder Spindelstation jeweils an diesen anzukoppeln und vor dem Weiterschalten des Spindelträgers von diesem wieder abzukoppeln.

Hinsichtlich der Genauigkeit der Bearbeitung und einer möglichst flexiblen Vorgehensweise ist es jedoch besonders vorteilhaft, wenn jede Werkstückspindel ständig mit dem Linearantrieb gekoppelt ist.

Ferner ist es in diesem Fall besonders zweckmäßig, wenn jede Werkstückspindel in Richtung der Spindelachse mittels des Linearantriebs definiert positionierbar und fixierbar ist, so daß keine zusätzlichen Vorrichtungen erforderlich sind, um die Werkstückspindel nach dem Positionieren in dieser Stellung noch zu fixieren.

Besonders vorteilhaft läßt sich eine derartige Mehrspindelwerkzeugmaschine dann ausbilden, wenn der Linearantrieb an dem Spindelträger sitzt und vorzugsweise einen auch am Spindelträger sitzenden Antriebsmotor umfaßt.

Zweckmäßigerweise ist dabei vorgesehen, daß der Linearantrieb an dem Spindelträger bezogen auf die jeweilige Werkstückspindel radial außen liegend angeordnet ist. Besonders raumsparend ist eine Anordnung, bei welcher der Linearantrieb in einem Winkelbereich zwischen zwei aufeinanderfolgenden Werkstückspindeln angeordnet ist, wobei insbesondere vorgesehen ist, daß der Linearantrieb bezüglich zweier aufeinanderfolgender Werkstückspindeln auf Lücke, das heißt im wesentlichen mittig zwischen diesen, angeordnet ist.

Die Werkstückspindeln sind, beispielsweise wenn große Antriebsleistungen gefordert werden, mit einem separaten Spindelantrieb, beispielsweise einem hinten an diese angeflanschten Antriebsmotor, versehen.

Wenn ein möglichst raumsparender Aufbau der Werkstückspindeln und somit ein relativ raumsparender Aufbau der gesamten Einheit aus Werkstückspindeln und Spindelträger gefordert ist, ist es besonders vorteilhaft, wenn jede Werkstückspindel als Motorspindel ausgebildet ist, da in diesem Fall der Spindelantrieb vorzugsweise in einer Pinole dieser Spindel integriert angeordnet werden kann.

Unter dem Merkmal, daß der Arbeitsraum um den Ständer herum angeordnet ist, ist die Aufgabe zu verstehen, daß der Arbeitsraum entweder nicht zusammenhängende oder, noch besser, zusammenhängende Teilräume aufweist, die um den Ständer herum angeordnet sind.

Hinsichtlich der Ausbildung des Arbeitsraums wurden im Zusammenhang mit der bisherigen Erläuterung der einzelnen Ausführungsbeispiele keine speziellen Angaben gemacht. So sieht ein besonders vorteilhaftes Ausführungsbeispiel vor, daß der Arbeitsraum einen Bewegungsraum für die Werkstückspindeln umfaßt, welcher in sich geschlossen und durchgehend rings um den Ständer herum verläuft. Ein derartiger Arbeitsraum ermöglicht dabei ein problemloses Weiterschalten der Werkstückspindeln in die einzelnen Spindelstationen.

Darüber hinaus ist vorteilhafterweise vorgesehen, daß der Arbeitsraum einen mindestens einer Spindelstation zugeordneten Spanerzeugungsraum umfaßt, wobei sich in diesem Spanerzeugungsraum das Werkzeug bewegt und dieser vorzugsweise so ausgebildet ist, daß die in diesem erzeugten Späne der Schwerkraft folgend nach unten fallen und abtransportiert werden können.

Darüber hinaus sieht eine vorteilhafte Lösung vor, daß der Arbeitsraum einen mindestens einer Spindelstation zugeordneten Be- oder Entladeraum umfaßt, in welchem ein Werkstück zum Einsetzen in die in dieser Spindelstation stehende Werkstückspindel zur Verfügung gestellt wird oder ein Werkstück aus einer in dieser Spindelstation stehenden Arbeitsspindel von einer Transportvorrichtung aufgenommen und abtransportiert wird.

Um insbesondere bei nebeneinanderliegenden Spanerzeugungsräumen und Be- oder Entladeräumen Probleme mit den erzeugten Spänen, insbesondere beim Greifen des Werkstücks durch das Werkstückspannfutter, zu vermeiden ist vorzugsweise vorgesehen, daß zwischen einem Spanerzeugungsraum und einem Be- oder Entladeraum eine Wand angeordnet ist.

Konsequenterweise ist ein vorteilhaftes Ausführungsbeispiel so konzipiert, daß zwischen dem jeder Spindelstation zugeordneten Spanerzeugungsraum oder Be- oder Entladeraum eine Wand angeordnet ist.

Die Wände sind vorzugsweise nicht nur zur Trennung dieser Räume eingesetzt, sondern dienen gleichzeitig auch zur Abstützung und somit mechanischen Stabilisierung des Ständers.

Um die beim Bearbeiten anfallenden Späne in optimaler Weise abzuführen ist vorzugsweise vorgesehen, daß das Unterteil eine unterhalb des Arbeitsraums liegende Spänewanne umfaßt.

Vorzugsweise ist das Unterteil dabei so ausgebildet, daß dieses eine um den Ständer herum unterhalb des Arbeitsraums verlaufende Spänewanne aufweist, so daß jede der Spindelstationen mit der Spänewanne in Verbindung ist und insbesondere aus den einzelnen, den Spindelstationen zugeordneten Räumen jeweils Späne oder Schneidmittel oder Reinigungsmittel abgeführt werden können.

Hinsichtlich der Anordnung der Werkstückspindeln an dem Spindelträger wurden im Zusammenhang mit der bisherigen Erläuterung der einzelnen Ausführungsbeispiele keine detaillierten Angaben gemacht. So sieht ein vorteilhaftes Ausführungsbeispiel vor, daß die Werkstückspindeln mit ihren Spindelachsen in jeweils demselben Abstand von der Drehachse angeordnet sind, so daß diese auf einem Kreis um die Drehachse liegen.

Ferner ist vorzugsweise vorgesehen, daß die Werkstückspindeln mit ihren Spindelachsen in konstanten Winkelabständen um die Drehachse angeordnet sind, um die Möglichkeit zu schaffen, bei Drehung des Spindelträgers jede der Werkstückspindeln in die nächstliegende Spindelstation bringen zu können.

Vorzugsweise sind sämtliche Spindelachsen im wesentlichen parallel zur Drehachse des Spindelträgers angeordnet und weisen insbesondere mit dieser denselben Winkel auf, wobei die Spindelachsen von der parallelen Ausrichtung zur Drehachse maximal wenige Grad, vorzugsweise weniger als 5 Grad abweichen.

Darüber hinaus ist vorzugsweise vorgesehen, daß die Drehachse des Spindelträgers im wesentlichen vertikal verläuft, das heißt im wesentlichen mit der Vertikalen einen Winkel von weniger als 20 Grad einschließt.

Ein besonders vorteilhaftes Ausführungsbeispiel sieht vor, daß die Spindelachsen parallel zueinander und parallel zur Drehachse verlaufen, wobei zweckmäßigerweise die Drehachse in vertikaler Richtung verläuft.

Hinsichtlich der Ausbildung der einzelnen Spindelstationen wurden im Zusammenhang mit der vorstehenden Erläuterung der einzelnen Ausführungsbeispiele keine näheren Angaben gemacht. So sieht ein vorteilhaftes Ausführungsbeispiel vor, daß mindestens ein Teil der Spindelstationen als Bearbeitungsstationen ausgebildet ist. Es ist aber auch möglich, sämtliche Spindelstationen als Bearbeitungsstationen auszubilden. In diesem Fall müßte an mindestens einer der Bearbeitungsstationen ein Einlegen und Entnehmen des Werkstücks zusätzlich zur Bearbeitung erfolgen.

Ein anderes vorteilhaftes Ausführungsbeispiel der erfindungsgemäßen Lösung sieht vor, daß mindestens ein Teil der Spindelstationen als Be- und Entladestationen ausgebildet ist, wobei dies vorzugsweise ausschließlich als Be- oder Entladestationen ausgebildete Spindelstationen sind. Dieses Ausführungsbeispiel bietet die Möglichkeit, insbesondere in Verbindung mit in Längsrichtung der Spindelachse linear bewegbaren Werkstückspindeln eine besonders einfache Zufuhr der Werkstücke, beispielsweise auf einem Horizontalförderer, zu realisieren.

Besonders vorteilhaft ist es hierbei, wenn die Werkstücke in der Spindelposition zentriert zur Spindelachse zum Greifen mit dem Werkstückspannfutter zur Verfügung gestellt sind.

Ferner wurden hinsichtlich der Drehbarkeit des Spindelträgers keine näheren Ausführungen gemacht. Beispielsweise wäre es möglich, den Spindelträger - wie bei konventionellen Mehrspindeldrehautomaten - stets in derselben Richtung weiterdrehen zu lassen, so daß jede der Werkstückspindeln zyklisch sämtliche Spindelstationen durchläuft.

Hinsichtlich der Versorgung der auf dem Spindelträger angeordneten Spindeln hat es sich jedoch als vorteilhaft erwiesen, wenn der Spindelträger von einer Ausgangsstellung um einen Maximalwinkel in einer Richtung bis zu einer Endstellung und dann wieder in entgegengesetzter Richtung zurück in die Ausgangsstellung drehbar ist und vom Maschinengestell zum Spindelträger ein flexibler Versorgungsstrang geführt ist, welcher der Drehbewegung um den Maximalwinkel folgt. Der Vorteil dieser Lösung ist darin zu sehen, daß damit die aus dem Stand der Technik bekannten Drehzuführungen bei der Versorgung der Werkstückspindeln entfallen können, so daß die gesamten Probleme mit derartigen Drehzuführungen nicht auftreten, sondern durch die mittels des flexiblen Versorgungsstrangs ständige Verbindung mit Versorgungs- und Steuereinrichtungen ein optimaler Betrieb der Werkstückspindeln, beispielsweise auch während des Weiterdrehens des Spindelträgers, möglich ist.

Vorzugsweise ist hierbei vorgesehen, daß der Spindelträger um einen Maximalwinkel drehbar ist, welcher einen ganzzahligen Vielfachen von 360°, geteilt durch die Gesamtzahl der Spindelpositionen, entspricht.

Die eingangs genannte Aufgabe wird darüber hinaus bei einer eingangs genannten Mehrspindelwerkzeugmaschine erfindungsgemäß dadurch gelöst, daß das Maschinengestell ein auf der Grundfläche stehendes Unterteil umfaßt, von welchem ausgehend sich in radial zur Drehachse und durch diese hindurch verlaufenden Ebenen liegende Tragelemente erheben, die sich bis zu einem Tragring erstrecken und diesen tragen, daß der Tragring den Spindelträger lagert, daß die Werkstückspindeln in ihren Spindelpositionen um die Drehachse herum angeordnet sind und daß radial innerhalb der Tragelemente um die Drehachse herum ein Arbeitsraum für die Bearbeitung der in den Werkstückspindeln gehaltenen Werkstücke angeordnet ist.

Der Vorteil dieser Lösung ist ebenfalls darin zu sehen, daß das Maschinengestell einerseits kompakt aufgebaut ist und andererseits eine optimale Raumausnutzung mit guter Zugänglichkeit zu den Werkstückspindeln und den Werkzeugen geschaffen ist.

Besonders gut ist die Zugänglichkeit zu den Werkstückspindeln und den Werkzeugen dann, wenn die Tragelemente aus flächenhaft sich in den Ebenen erstreckenden Körpern gebildet sind, so daß deren Erstreckung bei großer Stabilität in azimutaler Richtung möglichst gering ist.

Dies kann besonders vorteilhaft dadurch realisiert werden, daß die Tragelemente sich ausgehend von einer Umlaufbahn der Werkstückspindeln radial nach außen erstrecken, so daß innerhalb der Tragelemente ein azimutal um die Drehachse herum verlaufender Arbeitsraum gegeben ist, in welchem sich die Werkstückspindeln ungehindert bewegen können.

Eine besonders zweckmäßige Ausgestaltung sieht dabei vor, daß die Tragelemente als Tragwände ausgebildet sind.

Um eine möglichst stabile Konstruktion zu erreichen, ist vorzugsweise vorgesehen, daß der Arbeitsraum eine der Zahl der Werkstückspindeln entsprechende Zahl von Stationen aufweist, in welchen die Werkstückspindeln positionierbar sind und daß die Tragelemente jeweils zwischen zwei aufeinanderfolgenden Stationen angeordnet sind.

Hierbei könnten die Tragelemente beliebig angeordnet werden können, solange sie zwischen aufeinanderfolgenden Stationen stehen. Besonders zweckmäßig ist es hierbei, wenn die Tragelemente in gleichen Winkelabständen voneinander angeordnet sind, um damit ein möglichst symmetrisches Verhalten des Maschinengestells, insbesondere der Tragelemente mitsamt dem Tragring, bei sich ändernder Temperatur und auftretenden Belastungen zu erreichen.

Die Zahl der Tragelemente kann grundsätzlich beliebig sein. Besonders vorteilhaft ist es jedoch, wenn mindestens drei Tragelemente vorgesehen sind.

Eine besonders vorteilhafte Lösung sieht dabei vor, daß zwischen jeweils zwei aufeinanderfolgenden Stationen eines der Tragelemente angeordnet ist, so daß letztlich die Zahl der Tragelemente der Zahl der für die Werkstückspindeln vorgesehenen Stationen entspricht.

Hinsichtlich der Ausbildung der Tragelemente im einzelnen wurden bislang keine näheren Angaben gemacht. So sieht eine besonders vorteilhafte konstruktive Lösung für das Maschinengestell vor, daß sich die Tragelemente mit dem Tragring freitragend über dem Unterteil erheben und somit eine in sich steife, auf dem Unterteil sitzende Einheit bilden.

Vorzugsweise ist auch hierbei vorgesehen, daß das Unterteil einen radial sich bis zu den Tragelementen erstreckenden und um die Drehachse herum verlaufenden und sich auf der Grundfläche abstützenden Außenkörper umfaßt.

Dabei ist zweckmäßigerweise vorgesehen, daß die Tragelemente mit dem Außenkörper verbunden sind, wobei vorzugsweise eine lösbare Verbindung zwischen den Tragelementen und dem Außenkörper besteht.

Hinsichtlich der Lagerung des Spindelträgers wurden bislang im Zusammenhang mit dieser Lösung keine näheren Angaben gemacht. So sieht eine vorteilhafte Ausführungsform vor, daß der Spindelträger über ein Lager drehbar gelagert ist, welches sich radial außerhalb der von den Werkstückspindeln beim Drehen des Spindelträgers beschriebenen Bahnen liegt.

Vorzugsweise ist dabei vorgesehen, daß der Tragring das Lager für den Spindelträger trägt.

Besonders vorteilhaft für eine hohe Präzision der Maschine bei der Bearbeitung ist es, wenn der Spindelträger in einer Bearbeitungsstellung zur Bearbeitung der Werkstücke ausschließlich von dem Tragring getragen ist, da dieser - wie insbesondere im Rahmen der vorstehend erläuterten Ausführungsbeispiele dargelegt - möglichst steif mit dem Unterteil verbunden ist und ein vorteilhaftes Temperatur- und Belastungsverhalten, insbesondere ein zur Drehachse symmetrisches Verhalten, zeigt.

Rein prinzipiell könnte der Drehantrieb für den Spindelträger separat angeordnet sein. Besonders vorteilhaft ist es jedoch, wenn der Drehantrieb für den Spindelträger ebenfalls am Tragring angeordnet ist.

Der Drehantrieb könnte dabei auf beliebigen Seiten des Tragrings angeordnet sein. Um einen möglichst optimal zugänglichen Arbeitsraum zu erhalten ist es jedoch besonders vorteilhaft, wenn der Drehantrieb auf dem Tragring angeordnet ist und sich über den Tragring hinaus in Richtung der Drehachse erstreckt.

Die Lagerung des Spindelträgers könnte auf vielerlei Art erfolgen. Besonders vorteilhaft ist es, wenn der Tragring an dem Spindelträger auf einer Außenseite desselben angreift, um eine möglichst stabile Abstützung des Spindelträgers zu gewährleisten.

Um ferner die zur Lagerung des Spindelträgers erforderlichen Elemente günstig anordnen zu können und auch unterhalb des Spindelträgers ausreichenden Freiraum für einen ungestörten Zugang zum Arbeitsraum zu schaffen ist vorteilhafterweise vorgesehen, daß der Tragring den Spindelträger auf einer Außenumfangsseite umgibt.

Eine weitere Alternative einer erfindungsgemäßen Lösung sieht vor, daß das Maschinengestell ein auf der Grundfläche stehendes Unterteil umfaßt, von welchem ausgehend sich ein Ständer erhebt, daß der Ständer sich bis zum Spindelträger erstreckt und diesen lagert, daß die Werkstückspindeln in ihren Spindelpositionen um den Ständer herum angeordnet sind und daß um den Ständer herum der Arbeitsraum für die Bearbeitung der in den Werkstückspindeln gehaltenen Werkstücke angeordnet ist.

Der Vorteil der erfindungsgemäßen Lösung ist somit darin zu sehen, daß das Maschinengestell dadurch kompakt aufgebaut ist, daß dieses einen Ständer aufweist, welcher von den Werkstückspindeln umgeben ist und damit den innerhalb einer Bewegungsbahn der Werkstückspindeln liegenden nicht nutzbaren "toten Raum" dazu verwendet, um den Spindelträger zu lagern.

Dadurch wird eine wesentlich bessere Raumausnutzung gegenüber dem Stand der Technik erreicht und außerdem die Möglichkeit geschaffen, diejenigen Teile des Maschinengestells, die zusätzlich zum Ständer zur Stabilisierung und Positionierung des Spindelträgers erforderlich sind, weniger platzaufwendig auszuführen und dadurch wieder die Zugänglichkeit zu den einzelnen Werkstückspindeln und den Werkzeugen zu verbessern.

Unter einer Werkstückspindel im Sinne der vorliegenden Erfindung ist eine Vorrichtung zu verstehen, welche ein um die Spindelachse mittels eines Antriebs drehbares Werkstückhaltemittel umfaßt, wobei das Werkstückhaltemittel durch den Antrieb beispielsweise mit für eine klassische Drehbearbeitung üblichen Drehzahlen und Momenten antreibbar ist oder durch den Antrieb lediglich in definierten Positionen positionierbar ist, wobei in diesem Fall der Antrieb vorzugsweise als numerisch gesteuerte C-Achse ausgebildet ist, oder durch den Antrieb sowohl als klassische Drehspindel als auch als numerisch gesteuerte C-Achse betreibbar ist.

Besonders vorteilhaft ist dabei eine Lösung, bei welcher der Ständer radial innerhalb der von allen Werkstückspindeln beim Drehen des Spindelträgers durchlaufenen Bahnen liegt, so daß keinerlei Behinderung der Drehbewegung des Spindelträgers durch den Ständer möglich ist und im Extremfall der Spindelträger sich ständig in einer Drehrichtung weiterdrehen kann.

Der Ständer könnte zwar so angeordnet sein, daß die Drehachse des Spindelträgers seitlich desselben verläuft. Besonders vorteilhaft ist es jedoch, wenn die Drehachse des Spindelträgers den Ständer durchsetzt, so daß auf den Ständer keine all zu großen einseitigen Momente wirken.

Besonders vorteilhaft ist es dabei, wenn der Ständer symmetrisch zur Drehachse ausgebildet ist, um einerseits den Ständer möglichst symmetrisch zu belasten, andererseits aber auch um ein zur Drehachse symmetrisches mechanisches Verhalten des Ständers, beispielsweise im Fall von Wärmeausdehnungen, zu erzielen.

Der Ständer kann grundsätzlich in unterschiedlichster Art und Weise ausgebildet sein. Beispielsweise wäre es denkbar, den Ständer als massives Gebilde auszuführen. Eine besonders formsteife und andererseits gewichtssparende Lösung ist dann gegeben, wenn der Ständer als Hohlkörper ausgebildet ist.

Ferner ist es zur Verbesserung der mechanischen Steifigkeit des Ständers von Vorteil, wenn dieser Versteifungsrippen aufweist.

Eine hinsichtlich der Anordnung und Ausbildung des Arbeitsraums besonders zweckmäßige Lösung sieht vor, daß der Ständer mit einem Ständeroberteil sich im wesentlichen freitragend über dem Unterteil erhebt. Diese Lösung bietet den großen Vorteil, daß hierdurch zusätzliche gegebenenfalls im Arbeitsraum störende Abstützelemente für den Ständer vermieden werden können.

Der Ständer könnte grundsätzlich so ausgebildet sein, daß er mit einem Ständerfuß als Unterteil allein auf der Grundfläche aufsteht.

Eine besonders stabile Form eines Maschinengestells sieht jedoch vor, daß das Unterteil einen radial außerhalb des Ständers, um diesen herum verlaufenden und sich auf der Grundfläche abgestützten Außenkörper umfaßt. Ein derartiger radial außerhalb des Ständers um diesen herum verlaufender Außenkörper bietet durch die großflächigere Abstützung auf der Grundfläche eine höhere Stabilität für die Fixierung des Ständers relativ zur Grundfläche.

Besonders stabil ist die Abstützung des Ständers dann, wenn dieser mit dem Außenkörper verbunden ist. Dies läßt sich konstruktiv besonders einfach dadurch lösen, daß ein Ständerfuß des Ständers mit dem Außenkörper verbunden ist, wobei vorzugsweise der Ständerfuß mit dem Außenkörper über radial zur Drehachse verlaufende Stützwände verbunden ist, die einen radialen Zugang zu den zwischen diesen liegenden Teilräumen nicht behindern.

Hinsichtlich der Formsteifigkeit des Maschinengestells ist es von Vorteil, wenn der Ständerfuß mit dem Unterteil des Maschinengestells ein einstückiges Teil bildet.

Für den Zusammenbau einer erfindungsgemäßen Werkzeugmaschine hat es sich als besonders zweckmäßig erwiesen, wenn der Ständer durch eine parallel zur Grundfläche verlaufende Teilungsebene zwischen dem Ständerfuß und dem Ständeroberteil geteilt ist, da dies einerseits eine einfache Herstellung des Unterteils mit dem Ständerfuß gewährleistet und andererseits eine einfache Herstellung des Ständeroberteils.

Hinsichtlich der Anordnung des Spindelträgers am Maschinengestell wurden bislang keine genauen Angaben gemacht. So könnte der Spindelträger, wie bei Mehrspindlern mit waagerecht liegenden Spindeln üblich, an seinem Außenumfang gelagert sein. Besonders vorteilhaft bei der vorliegenden Lösung ist es jedoch, wenn der Spindelträger über ein Lager drehbar gelagert ist, welches radial innerhalb der von den Werkstückspindeln beim Drehen des Spindelträgers beschriebenen Bahnen liegt. Bei dieser Lösung besteht die Möglichkeit, den Spindelträger direkt am Ständer zu lagern und somit ein Maschinengestell zu bauen, welches den Spindelträger an seinem Außenumfang nicht übergreift und damit radial nach außen raumsparend baut.

Da die Drehlagerung des Spindelträgers beim Drehen desselben keine hohen Präzisionserfordernisse erfüllen muß, könnte die Drehlagerung nicht über den Ständer realisiert sein, sondern über einen über den Spindelträger greifenden Arm, der keine hohen Stabilitätserfordernisse erfüllen müßte, solange der Spindelträger zumindest bei der Bearbeitung eines Werkstücks zusätzlich an dem Ständer gelagert ist.

Besonders konsequent ist das erfindungsgemäße Konzept dann realisiert, wenn der Ständer auch das Drehlager für den Spindelträger trägt und insbesondere der Spindelträger während seiner Drehung ausschließlich an dem Ständer gelagert ist.

Insbesondere ist es hierbei vorteilhaft, wenn der Spindelträger während der Bearbeitung der Werkstücke ausschließlich von dem Ständer getragen ist, da sich der Ständer allein in einfacher Weise so ausbilden läßt, daß das mechanische Verhalten desselben für die Erzielung hoher Genauigkeiten beherrschbar ist.

Hinsichtlich der Anordnung des Drehantriebs für den Spindelträger wurden bislang keine näheren Ausführungen gemacht. Dieser könnte an beliebigem Ort des Maschinengestells angeordnet sein. Beispielsweise wäre es möglich, den Drehantrieb für den Spindelträger im Unterteil vorzusehen. Das erfindungsgemäße Konzept ist jedoch besonders konsequent dann ausgeführt, wenn der Drehantrieb für den Spindelträger am Ständer angeordnet ist, da hierbei einerseits der Antrieb des Spindelträgers in einfacher Weise realisiert werden kann und andererseits der Drehantrieb in dem "toten Raum", in dem bereits der Ständer angeordnet ist, ebenfalls untergebracht ist.

Eine besonders günstige Lösung, insbesondere zum direkten Antrieb des Spindelträgers, sieht vor, daß der Drehantrieb an einem Ständerkopf des Ständers angeordnet ist.

Hierbei wäre es beispielsweise möglich, den Drehantrieb in dem als Hohlkörper ausgebildeten Ständer unterzubringen.

Besonders vorteilhaft ist es jedoch, wenn der Drehantrieb auf dem Ständerkopf angeordnet ist und sich über den Ständerkopf hinaus in Richtung der Drehachse erstreckt. In diesem Fall liegt der Drehantrieb außerhalb des Ständers und ist somit für Wartungsarbeiten einfach zugänglich, während andererseits der Ständer hinsichtlich seiner mechanischen Konstruktion ohne Rücksicht auf die Unterbringung des Drehantriebs konzipiert werden kann.

Der Drehantrieb für den Ständer läßt sich durch einen Direktantrieb, das heißt eine direkte Verbindung des Spindelträgers mit einem Antriebsmotor, lösen, eine andere, ein Getriebe verwendende vorteilhafte Lösung sieht jedoch vor, daß das Getriebe ein ein- oder mehrstufiges Planetengetriebe ist, wobei dessen Außenzahnkranz fest mit dem Spindelträger verbunden ist. Dieses Planetengetriebe baut in Richtung der Drehachse äußerst kompakt und ermöglicht andererseits einen Antrieb des Spindelträgers frei von quer zur Drehachse wirkenden Kräften.

Im Zusammenhang mit der bisherigen Erläuterung der einzelnen Ausführungsbeispiele wurde nicht näher darauf eingegangen, wo das Werkzeug an dem Maschinengestell angeordnet sein soll.

Prinzipiell ist es möglich, das Werkzeug auch an dem Spindelträger anzuordnen und somit das Werkzeug mitsamt den Werkstückspindeln mitzubewegen.

Da jedoch bei der erfindungsgemäßen Mehrspindelwerkzeugmaschine ein Beladen mit Werkstücken erfolgen muß, ist es vorteilhaft, die Drehbewegung des Spindelträgers in einzelnen Spindelstationen zu unterbrechen. Aus diesem Grund ist es auch vorteilhaft, in den einzelnen Spindelstationen das Werkzeug an dem Maschinengestell anzuordnen, um bei feststehendem Spindelträger in der einzelnen Spindelstation das Werkstück zu bearbeiten, das von der Werkstückspindel gespannt ist, die in der jeweiligen Spindelstation steht.

Beispielsweise wäre es möglich, an dem Ständer einen Werkzeugträger für das Werkzeug vorzusehen. Besonders vorteilhaft ist es jedoch, wenn das Unterteil einen Werkzeugträger für das Werkzeug trägt, da damit eine einfach zugängliche Montage des Werkzeugträgers und eine besonders formsteife Fixierung desselben seitlich des Ständers an dem Unterteil möglich ist.

Eine besonders zweckmäßige Lösung sieht dabei vor, daß der Werkzeugträger am Außenkörper des Unterteils angeordnet ist und somit eine Montage des Werkzeugträgers von außerhalb des Maschinengestells in ergonomisch günstiger Art und Weise möglich ist.

Prinzipiell wäre es möglich, bei der erfindungsgemäßen Werkzeugmaschine in der mit dem Werkzeug versehenen Spindelstation mit einem feststehenden Werkzeug zu arbeiten. Besonders vorteilhaft ist es jedoch, wenn der Werkzeugträger radial zur Spindelachse der jeweiligen Werkstückspindel bewegbar ist, um durch geeignete Bewegung des Werkzeugträgers mit dem Werkzeug unterschiedliche Stellungen des Werkzeugs relativ zum Werkstück realisieren zu können.

Eine besonders zweckmäßige Lösung, die insbesondere die Durchführung konventioneller Drehbearbeitungen ermöglicht, sieht vor, daß das Werkzeug durch eine NC-gesteuerte X-Achse radial zur Spindelachse der in der jeweiligen Spindelstation stehenden Werkstückspindel bewegbar und positionierbar ist. Damit besteht beispielsweise die Möglichkeit, auch bei starr mit dem Spindelträger verbundenen Werkstückspindeln alle einfachen mit einer X-Achse möglichen Drehbearbeitungen durchzuführen.

Vorzugsweise ist hierzu vorgesehen, daß der Werkzeugträger auf einem in X-Achse verschiebbaren Schlitten sitzt, wobei dieser Schlitten in bei Werkzeugmaschinen üblicher Weise längs der X-Achse bewegbar ist, beispielsweise mit einem Spindelantrieb.

Vorzugsweise sitzt bei einem am Maschinengestell angeordneten Werkzeug der Schlitten auf einer Schlittenführung, welche am Unterteil, vorzugsweise dem Außenkörper desselben, montiert ist.

Hinsichtlich der Anordnung der Werkstückspindeln relativ zum Spindelträger wurden bislang keine näheren Ausführungen gemacht. Prinzipiell können die Werkstückspindeln längs ihrer Spindelachse relativ zum Maschinengestell unverschiebbar angeordnet sein. Um eine Z-Achse zur Bearbeitung des Werkstücks zur Verfügung zu haben, wäre es möglich, den Werkzeugträger mit dem Werkzeug durch ein Schlittensystem in Z-Richtung relativ zur Werkstückspindel zu bewegen.

Eine besonders gute Zugänglichkeit des Arbeitsraums ist dann gegeben, wenn dieser von seiner dem Ständer abgewandten Außenseite her ungehindert durch vom Spindelträger zum Unterteil hin verlaufende und den Spindelträger lagernde Elemente zugänglich ist, so daß eine durch derartige Elemente bedingte Behinderung nicht gegeben ist.

Weiterhin sieht ein vorteilhaftes Ausführungsbeispiel vor, daß der Arbeitsraum von seiner dem Ständer abgewandten Außenseite her ungehindert durch zum Unterteil hin verlaufende und den Ständer gegenüber dem Unterteil versteifende Elemente zugänglich ist, so daß ebenfalls jede hierdurch erfolgende Behinderung beim Zugang zum Arbeitsraum entfällt.

Weitere vorteilhafte Ausführungsbeispiele dieses erfindungsgemäßen Konzepts weisen die gleichen Merkmale auf wie die Ausführungsbeispiele des vorherstehend beschriebenen Konzepts, insbesondere im Hinblick auf die Anordnung und Verschiebbarkeit der Werkstückspindeln relativ zum Spindelträger sowie die Anordnung und Bewegbarkeit der Werkzeuge und Werkstückzu- und -abführungen.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Seitenansicht eines vertikalen Schnitts durch ein erstes Ausführungsbeispiel einer erfindungsgemäßen Mehrspindelwerkzeugmaschine;
- Fig. 2: eine vergrößerte ausschnittsweise Darstellung des Schnitts in Fig. 1 im Bereich eines Ständerkopfes;
- Fig. 3: eine vergrößerte Darstellung des Schnitts in Fig. 1 im Bereich einer Spindel;
- Fig. 4: einen Längsschnitt durch eine Spindel des ersten Ausführungsbeispiels;
- Fig. 5: einen Schnitt längs Linie 5-5 in Fig. 1;
- Fig. 6: einen Schnitt längs Linie 6-6 in Fig. 1 mit Draufsicht auf einen flexiblen Versorgungsstrang in Ausgangsstellung;
- Fig. 7: einen Schnitt ähnlich Fig. 6 beim in Endstellung nach einer Drehung um 315° liegendem Versorgungsstrang;
- Fig. 8: eine Seitenansicht eines vertikalen Schnitts ähnlich Fig. 1 durch ein zweites Ausführungsbeispiel einer erfindungsgemäßen Mehrspindelwerkzeugmaschine und

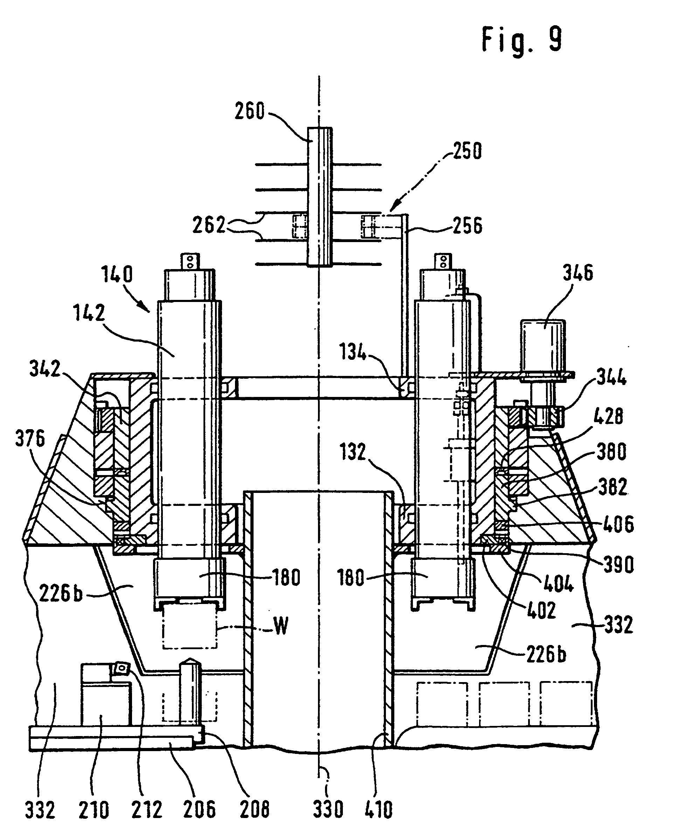

- Fig. 9: eine vergrößerte ausschnittsweise Darstellung des Schnitts in Fig. 8 im Bereich eines Lagerrings.

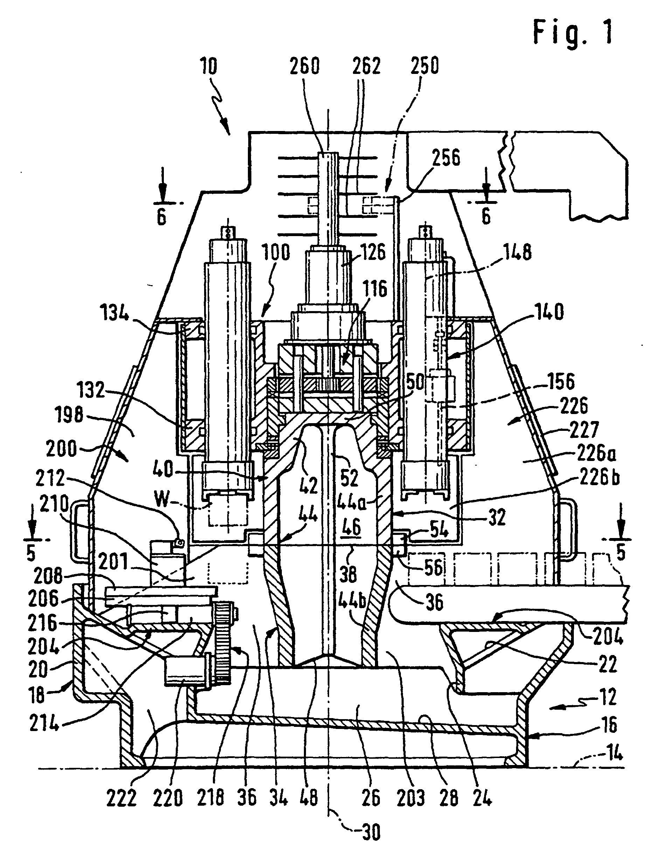

Ein erstes Ausführungsbeispiel einer erfindungsgemäßen Mehrspindelwerkzeugmaschine, in Fig. 1 als Ganzes mit 10 bezeichnet, umfaßt ein Maschinengestell 12, welches ein auf einer Grundfläche 14 stehendes Unterteil 16 aufweist. Dieses Unterteil 16 weist einen äußeren Ringkörper 18 mit einer zylindrischen Außenwand 20 sowie einer von dieser ausgehend schräg nach innen abfallenden Ablaufwand 22 auf. Die Ablaufwand 22 endet auf ihrer inneren, der Außenwand 20 abgewandten Seite mit einer inneren Ringwand 24, welche eine Öffnung eines als Ganzes mit 26 bezeichneten Spänesumpfes umschließt, wobei der Spänesumpf einen in einer Querrichtung schräg verlaufenden Boden 28 aufweist.

Vorzugsweise ist der äußere Ringkörper 18 symmetrisch, insbesondere rotationssymmetrisch, zu einer Mittelachse 30 ausgebildet, wobei die Mittelachse 30 senkrecht auf der Grundfläche 14 steht und diese durchstößt.

Um die Mittelachse 30 herum ist ein als Ganzes mit 32 bezeichneter Ständer angeordnet, welcher sich über dem Spänesumpf 26 beginnend von dem Unterteil 16 weg längs der Mittelachse 30 erstreckt. Der Ständer 32 umfaßt dabei einen Ständerfuß 34, welcher über von diesem Ständerfuß 34 ausgehende und sich radial zur Mittelachse 30 in Richtung des Ringkörpers 18 erstreckende und sich an der Ablaufwand 22 aufstützende Stützwände 36 getragen ist.

Vorzugsweise bildet dabei der Ständerfuß 34 mit den Stützwänden 36 und dem Ringkörper 18 ein einstückiges und in einem Stück aus demselben Material hergestelltes Teil.

Der Ständerfuß 34 wird durch eine Trennebene 38, welche vorzugsweise parallel zur Grundfläche 14 verläuft, von einem Ständeroberteil 40 getrennt, mit welchem sich der Ständer 32 freitragend in Richtung der Mittelachse weiter von dem Unterteil 16 weg bis zu einem Ständerkopf 42 erstreckt.

Der Ständer 32 umfaßt erfindungsgemäß ein Ständerrohr 44, welches einen inneren Hohlraum 46 umschließt, nach unten zum Spänesumpf 26 über eine Öffnung 48 hin offen ist und nach oben durch eine am Ständerkopf 42 angeordnete Kopfplatte 50 verschlossen ist.

Ferner sind zur Versteifung des Ständerrohrs 44 von diesem ausgehende und in den Hohlraum 46 hineinragende Rippen 52 vorgesehen.

Die Verbindung zwischen dem Ständeroberteil 40 mit dem Ständerkopf 42 und dem Ständerfuß 34 im Bereich der Trennebene 38 erfolgt mittels am Ständeroberteil 40 gehaltenen und nach außen über das Ständerrohr 44 abstehenden Lageraugen 54, welche mit entsprechenden Lageraugen 56, vorzugsweise angeordnet am Ständerrohr 44 des Ständerfußes 34 und an den Stützwänden 36, beispielsweise mittels Schrauben, verbindbar sind. Ferner sitzt das Ständerrohr 44a des Ständeroberteils 40 stumpf auf dem Ständerrohr 44b des Ständerfußes 34.

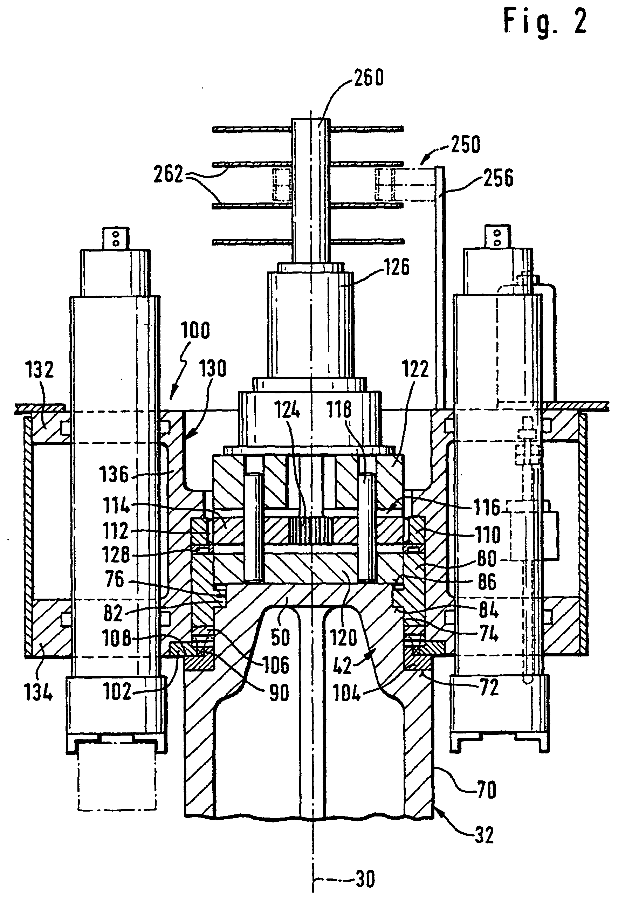

Wie in Fig. 2 vergrößert dargestellt, ist der Ständerkopf 42 mit einer Stufe versehen, welche durch eine sich von einer äußeren Mantelfläche 70 des Ständerrohrs 44 radial nach innen erstreckenden ringförmigen Flanschfläche 72 und einer sich an diese anschließende radial gegenüber der äußeren Mantelfläche 70 zurückgesetzte Zylinderfläche 74 gebildet ist, wobei letztere in Richtung der Kopfplatte 50 bis zu einer Ringnut 76 erstreckt, welche im Bereich der Kopfplatte 50 angeordnet ist.

An der Zylinderfläche 74 ist eine als Ganzes mit 80 bezeichnete Hülse geführt, an welche ein in die Ringnut 76 eingreifender Ringkolben 82 angeformt ist, der zwischen zwei in radialer Richtung zur Mittelachse 30 verlaufenden Nutwänden 84 und 86 der Ringnut 76 beweglich ist und damit jeweils einen zwischen dem Ringkolben 82 und der jeweiligen Nutwand 84 oder 86 liegenden Zylinderraum begrenzt. Durch Beaufschlagung des einen oder anderen Zylinderraums ist der Ringkolben 82 und somit auch die Hülse 80 in einer Richtung parallel zur Mittelachse 30 gegenüber dem Ständerkopf 42 verschiebbar.

An der Hülse 80 ist mittels eines Radiallagers 90, das zwischen Ringen 102 und 104 einer Hirthverzahnung angeordnet ist, eine als Ganzes mit 100 bezeichnete Spindeltrommel um die Mittelachse 30 als Drehachse drehbar gelagert. Die Spindeltrommel 100 ist ferner mit einem drehfest mit dieser verbundenen ersten Ring 102 der Hirthverzahnung verbunden, welcher an dem zweiten, drehfest mit dem Ständerkopf 42 verbundenen Ring 104 der Hirthverzahnung geführt und gegenüber diesem drehbar ist, wobei beide Ringe 102 und 104 in radialer Richtung zur Mittelachse 30 verlaufende und in Richtung der Hülse 80 weisende Zahnreihen aufweisen, in welche eine Zahnreihe eines fest mit der Hülse 80 verbundenen dritten Rings 106 in Eingriff bringbar ist, wobei die drei Ringe 102, 104 und 106 gemeinsam die dreiteilige Hirthverzahnung bilden.

Um den zweiten, drehfest mit dem Ständerkopf 42 verbundenen Ring 104 der Hirthverzahnung in Richtung der Mittelachse 30 festzulegen, stützt sich dieser vorzugsweise unmittelbar an der Flanschfläche 72 ab und ist ebenfalls noch an der Zylinderfläche 74 in radialer Richtung zentriert.

Die drei Ringe 102, 104, und 106 der Hirthverzahnung sind dadurch miteinander in Eingriff bringbar, daß mittels der Hülse 80 der dritte Ring 106 mit seiner Verzahnung in die Verzahnungen des ersten und zweiten Rings 102, 104 gedrückt wird, wobei gleichzeitig der erste Ring 102 sich auf dem zweiten Ring 104 an einer flanschähnlichen Stützfläche 108 abstützt, so daß insgesamt durch die dreiteilige Hirthverzahnung mittels der Ringe 102, 104 und 106 die Spindeltrommel 100 nicht nur drehfest gegenüber dem Ständerkopf 42 fixierbar ist, sondern auch hinsichtlich ihrer Position in Richtung parallel zur Mittelachse 30 eindeutig festgelegt ist.

Durch Bewegen der Hülse 80 und des mit dieser verbundenen dritten Rings 106 der Hirthverzahnung von dem ersten und zweiten Ring 102, 104 weg ist die Hirthverzahnung und somit die drehfeste Festlegung der Spindeltrommel 100 lösbar, so daß die Spindeltrommel 100 gegenüber der Hülse 80 um die Mittelachse 30 als Drehachse drehbar ist.

Zum Antrieb der Drehbewegung der Spindeltrommel 100 ist diese mit einem Zahnkranz 110 mit einer Innenverzahnung 112 versehen, wobei der Zahnkranz 110 auf einer der Hirthverzahnung 102, 104, 106 gegenüberliegenden Seite der Hülse 80 angeordnet und drehfest mit der Spindeltrommel 100 verbunden ist.

Dieser Zahnkranz 110 ist über Planetenräder 114 eines als Ganzes mit 116 bezeichneten Planetengetriebes antreibbar, wobei die Planetenräder 114 auf Achsen 118 sitzen, die einerseits drehfest in einer unmittelbar auf der Kopfplatte 50 aufliegenden unteren Gehäuseplatte 120 und andererseits drehfest in einer oberen Gehäuseplatte 122 fest verankert sind und damit die Gehäuseplatten 120 und 122 in einem definierten Abstand halten, wobei die Planetenräder 114 in Aussparungen von einer der Gehäuseplatten 120 und 122 liegen.

Die Planetenräder 114 sind durch ein zentrales Ritzel 124 antreibbar, welches direkt auf einer Motorwelle eines Antriebs 126 sitzt, der auf der oberen Gehäuseplatte 122 fixiert ist und mit seiner Motorwelle diese durchgreift.

Durch Antrieb der drei Planetenräder 114 mittels des radial elastisch bewegbaren Ritzels 124 ist über die in die Innenverzahnung 112 eingreifenden Planetenräder 114 der Zahnkranz 110 querkraftfrei bezüglich der Mittelachse 30 antreibbar.

Um ferner bei dem Drehen der Spindeltrommel 100 den ersten Ring 102 von der Stützfläche 108 des zweiten Rings 104 der Hirthverzahnung durch eine Bewegung ebenfalls in Richtung der Mittelachse 30 zu trennen, ist zwischen der Hülse 80 und dem Zahnkranz 110 ein Axiallager 128 angeordnet, über welches die Spindeltrommel 100 mitsamt dem ersten Ring 102 in Richtung der Mittelachse 30 bewegbar ist, so daß der erste Ring 102 vom zweiten Ring 104 der Hirthverzahnung minimal abhebt. In diesem Zustand ist die Spindeltrommel 100 lediglich über das Axiallager 128 gegenüber der Hülse 80 und das Radiallager 90 gegenüber dem Ständerkopf 42 gelagert, während im drehfesten Zustand das Axiallager 128 und das Radiallager 90 wirkungslos sind und eine Fixierung und genaue Positionierung der Spindeltrommel 100 gegenüber dem Ständer 32 nur über die drei Ringe 102, 104 und 106 der Hirthverzahnung erfolgt.

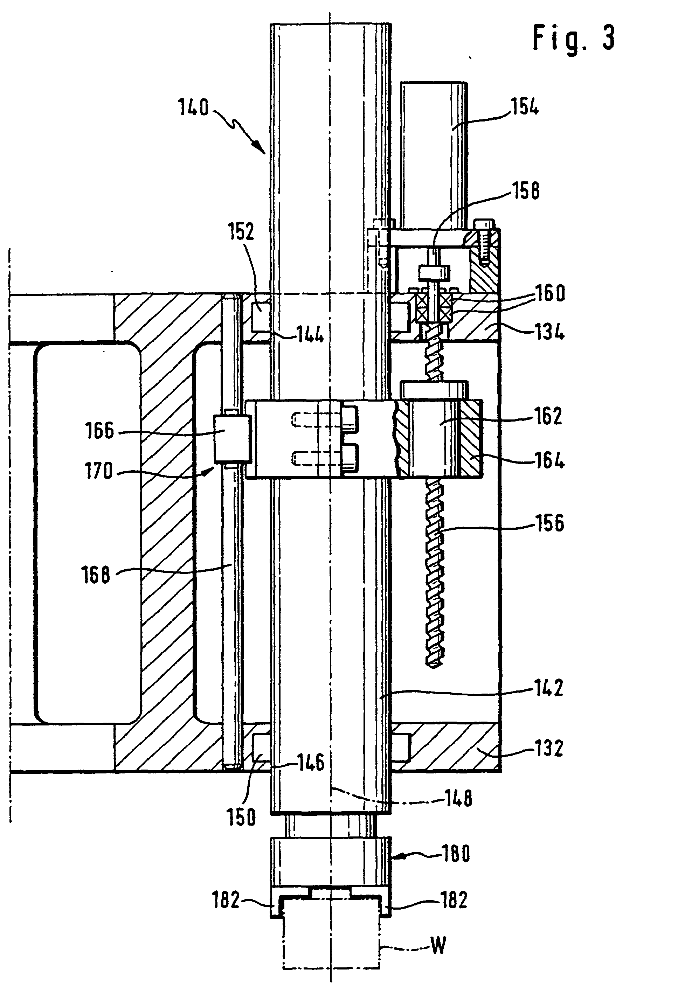

Die Spindeltrommel 100 umfaßt einen Trägerkörper 130 mit zwei im Abstand voneinander angeordneten Trägerflanschen 132 und 134, die radial nach außen von einem sich zwischen diesen erstreckenden Innenzylinder 136 abstehen und mit diesem ein einstückiges Teil bilden (Fig. 2 und 3).

An dem Trägerkörper 130 sind in jeweils gleichen radialen Abständen von der Drehachse oder Mittelachse 30 und in konstanten Winkelabständen bezüglich der Drehachse 30 mehrere, beispielsweise acht, Spindeln 140 angeordnet, wobei die Spindeln 140 mit ihren Pinolen 142 Pinolendurchbrüche 144 bzw. 146 in den Trägerflanschen 132, 134 durchsetzen.

Die Spindeln 140 sind dabei mit ihren Spindelachsen 148, wie in Fig. 3 dargestellt, so ausgerichtet, daß diese parallel zur Drehachse 30 verlaufen. Ferner sind die Pinolen 142 an den Trägerflanschen 132 und 134 zur Durchführung einer Z-Achsenbewegung gegenüber der Spindeltrommel 100 in Richtung ihrer Spindelachsen 148 linear verschiebbar mittels in den Trägerflanschen 132 und 134 sitzenden Linearführungen 150 bzw. 152 gelagert.

Zur linearen Bewegung der Pinolen 142 in Richtung ihrer Spindelachsen 148 ist ein Z-Achsen-Antriebsmotor 154 vorgesehen (Fig. 3), welcher eine parallel zur Spindelachse 148 ausgerichtete Kugelgewindespindel 156 antreibt, die an einem Kugelgewindeende, beispielsweise im Bereich der Verbindung mit einer Abtriebswelle 158 des Antriebsmotors 154, mittels eines Lagers 160 sowohl radial als auch axial in dem Trägerflansch 134 gelagert ist.

Die Kugelgewindespindel 156 erstreckt sich dabei mit ihrem Spindelabschnitt vorzugsweise zwischen den beiden Trägerflanschen 132 und 134 neben der Pinole 142 und der Antriebsmotor 154 ist auf einer der Kugelgewindespindel 156 gegen-überliegenden Seite des Trägerflansches 134 ebenfalls neben der Pinole 142 angeordnet und an dem Trägerflansch 134 gehalten. Somit liegt eine Kugelgewindemutter 162 ebenfalls zwischen den beiden Trägerflanschen 132 und 134. Diese sitzt ferner in einem an der Pinole 142 fixierten Halter 164, welcher sich ausgehend von der Pinole 142 in Richtung der Kugelgewindemutter 162 erstreckt und vorzugsweise diese mittels eines Durchbruchs aufnimmt. Ferner umschließt der Halter 164 vorzugsweise die Pinole 142 und trägt einen Führungskörper 166, welcher an einem Linearführungselement 168, vorzugsweise einem sich parallel zur Spindelachse 148 und zur Drehachse 30 erstreckenden Führungsstab, geführt ist, wobei der Führungskörper 166 mit dem Linearführungselement 168 eine Verdrehsicherung 170 für die in Richtung der Spindelachse 148 linear bewegliche Pinole 142 darstellt, so daß die Kugelgewindespindel 156 querkraftfrei in der Kugelgewindemutter 162 läuft.

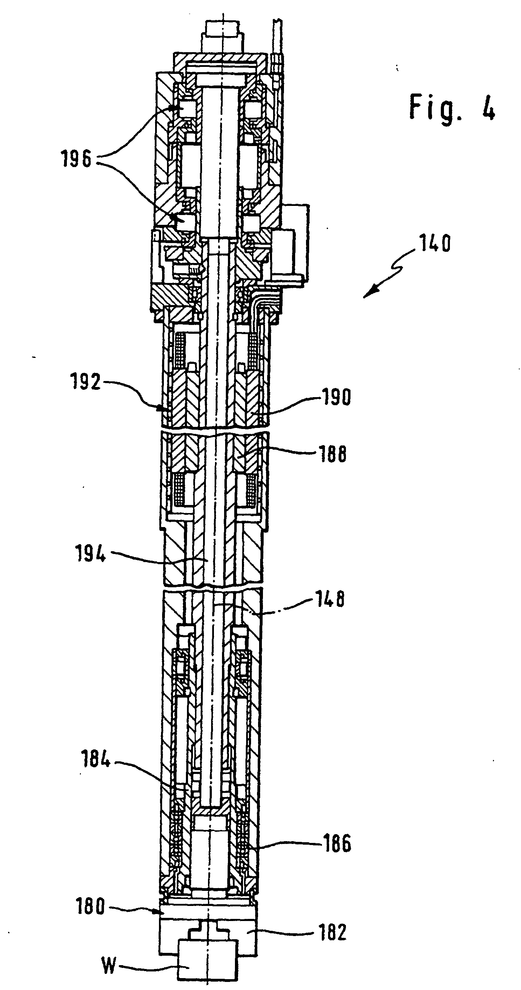

Jede Werkstückspindel 140 umfaßt ein dem Unterteil 16 zugewandt angeordnetes, beispielsweise ein Werkstückspannfutter 180 bildendes Werkstückspannmittel, welches in der Pinole 142 um die Spindelachse 148 drehbar gelagert ist, wobei das Werkstückspannfutter 180 Spannbacken 182 (Fig. 4) zum Spannen eines Werkstücks W umfaßt. Dieses Werkstückspannfutter 180 sitzt dabei auf einem Spindelrohr 184, welches seinerseits über Radiallager 186 drehbar in der Pinole 142 gelagert ist und über einen Läufer 188, welcher zusammen mit einem fest in der Pinole 142, vorzugsweise in einem dem Werkstückspann-futter 180 gegenüberliegenden Bereich derselben, eingebauten Stator 190 einen als Ganzes mit 192 bezeichneten Einbaumotor zum Drehantrieb des Werkstückspannfutters 180 bildet.

Ferner ist zur Betätigung des Werkstückspannfutters 180 noch ein das Spindelrohr 184 durchsetzendes Spannrohr 194 vorgesehen, welches sich durch das Spindelrohr 184 und durch den Läufer 188 hindurch erstreckt und zu einem hydraulischen Spannzylinder 196 führt, welcher an einem dem Spannfutter 180 gegenüberliegenden Ende der Pinole 142 angeordnet ist. Mit diesem hydraulischen Spannzylinder 196 ist das Werkstückspannfutter 180 in üblicher Weise betätigbar (Fig. 4).

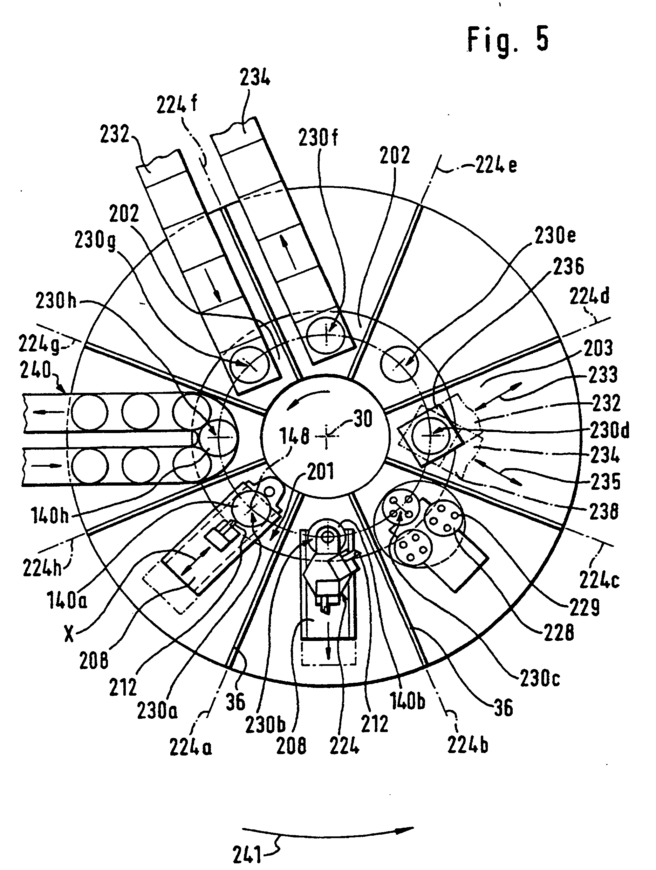

Wie in Fig. 1 dargestellt, sind die Werkstückspannfutter 180 auf der dem Unterteil 16 zugewandten Seite der Spindeltrommel 100 angeordnet, so daß sie in einen oberen Teilraum 198 eines Arbeitsraums 200 hineinragen, welcher um den Ständer 32 herum ringförmig geschlossen verläuft. Der Arbeitsraum 200 umfaßt ferner, wie in Fig. 1 und 5 dargestellt, noch Spanerzeugungsräume 201 und Be- oder Entladeräume 202 oder auch Be- und Entladeräume 203, die teilweise unterhalb des oberen Teilraums 198 liegen und bis in das Unterteil 16 hineinragen, so daß das Unterteil 16 von dem Arbeitsraum 200 noch diese unteren Teilräume umschließt.

Zur Bearbeitung von in den Werkstückspannfuttern 180 gespannten Werkstücken W in dem Arbeitsraum 200 sind auf am Unterteil ausgebildeten Trägerpulten 204 angeordnete Schlittenführungen 206 mit darauf angeordneten Schlitten 208 vorgesehen, welche Werkzeugträger 210 mit Werkzeugen 212 tragen. Die Schlitten 208 sind dabei, wie in Fig. 5 dargestellt, in radialer Richtung zur Spindelachse 148 einer in einer diesem Werkzeug 212 zugeordneten Bearbeitungsstation stehenden Werkstückspindel 140 bewegbar.

Vorzugsweise sind die Trägerpulte 204 dabei aus der Ablaufwand 22 als einstückiges Teil ausgeformt.

Zum Antrieb der Schlitten 208 relativ zu den Schlittenführungen 206 ist vorzugsweise unterhalb des jeweiligen Schlittens 208 eine Kugelgewindespindel 214 vorgesehen, auf welcher eine Kugelgewindemutter 216 sitzt. Die Kugelgewindespindel 214 ist dabei ihrerseits über ein Getriebe 218 mit einem Achsantriebsmotor 220 verbunden, der vorzugsweise auf der der Schlittenführung 206 gegenüberliegenden Seite des Trägerpults 204 unterhalb desselben angeordnet ist und in einen von dem Ringkörper 18 mit der Außenwand 20 der Ablaufwand 22 oder den Trägerpulten 204 sowie der Ringwand 24 umschlossenen Hohlraum 222 hineinragt.

Die Spanerzeugungsräume 201 und die Be- oder Entladeräume 202, 203 sind jeweils einzelnen am Maschinengestell vorgesehenen und der Zahl der Werkstückspindeln entsprechenden Spindelstationen 230 zugeordnet und werden, soweit sie in das Unterteil 16 hineinragen, durch die Stützwände 36 getrennt, die jeweils in Ebenen 224 liegen, welche durch die Mittelachse 30 hindurch verlaufen und jeweils mittig, d.h. auf der Winkelhalbierenden, zwischen zwei aufeinanderfolgenden Spindelstationen 230 liegen. Vorzugsweise verlaufen die Stützwände 36 in demselben Winkelabstand voneinander und deren Zahl entspricht der Zahl der Spindelstationen 230 (Fig. 5).

Der obere Teilraum 198 ist mit Späneschutzwänden 226 versehen, welche in denselben Ebenen 224 wie die Stützwände 36 stehen, wenn der Spindelträger 100 die Werkstückspindeln 140 in den Spindelstationen 230 positioniert. Die Späneschutzwände 226 sind dabei in stationäre am Maschinengestell 12 gehaltene Späneschutzwandelemente 226a und bewegliche, am Spindelträger 100 gehaltene und mit diesem bewegbare Späneschutzwandelemente 226b unterteilt, welche sich zu der im wesentlichen vom Ständer 32 bis zu einer äußeren Arbeitsraumabdeckung 227 erstreckenden Späneschutzwand 226 ergänzen.

Wie in Fig. 5 dargestellt, ist bei der in einer ersten Spindelstation 230a stehenden Werkstückspindel 140a bei-spielsweise eine Bearbeitung des Werkstücks W durch Bewegung der Werkstückspindel 140a mit der Z-Achse in Z-Richtung und durch Bewegung des Werkzeugs 212 mit der X-Achse in X-Richtung durchführbar, wobei die Bearbeitung in dem Spanerzeugungsraum 201 erfolgt, so daß die Späne und das Schneid-mittel durch Wirkung der Schwerkraft vom nach unten zum Spänesumpf 26 hin offenen Spanerzeugungsraum 201 direkt in den Spänesumpf 26 gelangen.

Bei der in der danebenliegenden Spindelstation 230b stehenden Werkstückspindel 140b erfolgt beispielsweise ebenfalls eine Bearbeitung, wobei in diesem Fall anstelle des Werkzeugträgers 212 ein Werkzeugrevolver 224 mit mehreren Werkzeugen 212 auf dem Schlitten 208 angeordnet ist.

In der nächstfolgenden Spindelstation 230c ist beispielsweise ebenfalls eine Bearbeitung des in der Werkstückspindel 140c gehaltenen Werkstücks W möglich, und zwar durch auf einen Mehrfachbohrkopf 228 angeordnete auswechselbare Bohrwerkzeuge 229.

In der nächstfolgenden Spindelstation 230d ist beispielsweise keine Bearbeitung vorgesehen, sondern ein Ein- und Auswechseln des Werkstücks W in die Werkstückspindel 140d in dem Be- und Entladeraum 203. Hierzu sind ein Werkstückzufuhrband 232 sowie ein Werkstückabfuhrband 234 vorgesehen, welche jeweils linear in Transportrichtung 233 bzw. 235 als Ganzes bewegbar sind, so daß entweder das Werkstückzufuhrband 232 mit seinem Ende 236 in der Lage ist, ein auf diesem stehendes Werkstück W für einen Zugriff durch das Werkstückspannfutter 180 der Werkstückspindel 140d zentriert und parallel ausge-richtete zur Spindelachse 148 derselben zur Verfügung zu stellen oder das Werkstücktransportband 234 mit seinem Ende 238 in der Lage ist, ein Werkstück W aus dem Werkstückspannfutter 180 der Werkstückspindel 140 aufzunehmen.

Alternativ zur Werkstückzu- und -abfuhr über die Werkstücktransportbänder 232 und 234 ist, beispielsweise in den Spindelstationen 230f und 230g dargestellt, jeweils für jede der Spindelstationen ein einziges Werkstückzufuhrband 232 oder Werkstückabfuhrband 234 vorgesehen, welches in den jeweiligen Be-oder Entladeraum 202 hinein verläuft, um in der entsprechenden Spindelstation 230f oder 230g ein Werkstück W von dem Werkstückspannfutter 180 zu übernehmen oder zuzuführen und zum Greifen durch das Werkstückspannfutter 180 zur Verfügung zu stellen. Bei einer weiteren, achten Spindelstation 230h ist beispielhaft, eine umlaufende Werkstückzu-fuhreinrichtung 240 dargestellt, welche in dem Be- und Entladeraum 203 ein Werkstück W aus dem Werkstückspannfutter 180 der in dieser Spindelstation 230h stehenden Werkstückspindel 140h aufnehmen oder ein Werkstück dem Zugriff für das Werkstückspannfutter 180 zur Verfügung stellen kann.

Die einzelnen Werkstückspindeln 140a bis 140h sind durch Weiterschalten der Spindeltrommel 100 um eine Spindelstation in die jeweils nächstfolgende Spindelstation 230b bis 230a bringbar und durch weiteres Weiterschalten der Spindeltrommel 100 um eine Spindelstation in die nächstfolgende Spindelstation 230c bis 230b bringbar, so daß das in einer Spindelstation, beispielsweise 230h eingesetzte Werkstück sukzessive in den nachfolgenden Spindelstationen 230a bis 230c bearbeitet und beispielsweise in der Spindelstation 230d entnommen werden kann. Gleichzeitig ist in der Spindelstation 230d die Zufuhr eines weiteren Werkstücks möglich, welches beispielsweise in der Spindelstation 230e ebenfalls bearbeitet werden kann.

Bei der erfindungsgemäßen Mehrspindelwerkzeugmaschine ist ein Weiterschalten in einer Drehrichtung, beispielsweise gekennzeichnet durch den Pfeil 241 möglich.

Da bei der erfindungsgemäßen Lösung auf der Spindeltrommel 100 jedoch insgesamt acht Werkstückspindeln 140 angeordnet sind, von denen jede mit dem Z-Achsantrieb längs der Z-Achse verschiebbar ist und bei denen jeweils das Werkstückspannfutter 180 mittels des Einbaumotors 192 antreibbar ist, ist eine Vielzahl von Versorgungs- und Steuerleitungen zu der Spindeltrommel zu führen.

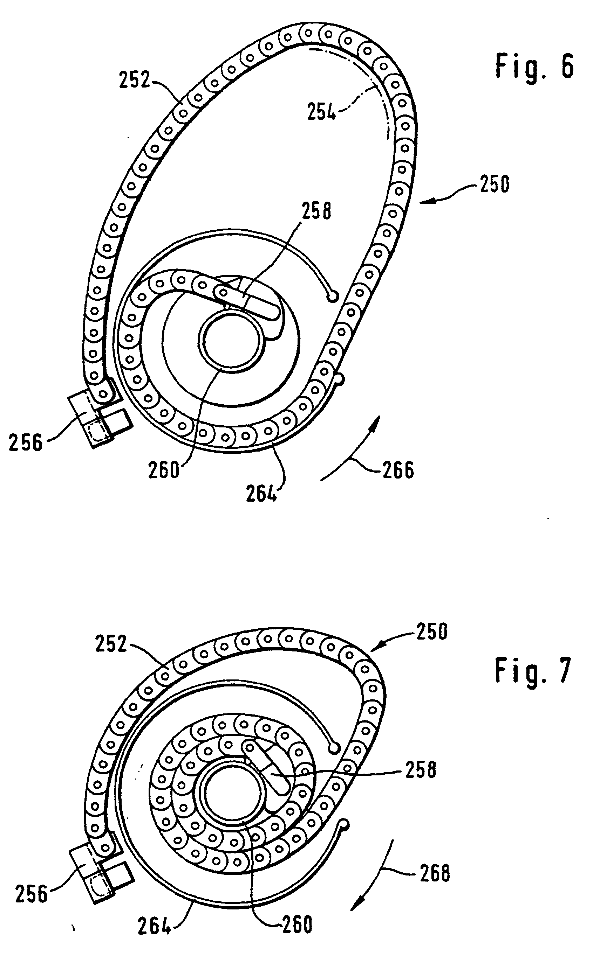

Dies erfolgt vorteilhafterweise, wie in Fig. 1, 6 und 7 dargestellt, durch einen Versorgungsstrang 250, welcher eine flexible Segmentkette 252 und an dieser geführte flexible Versorgungsleitungen 254 aufweist. Der Versorgungsstrang 250 ist an einem Ende 256, mit der Spindeltrommel 100 fest verbunden und mit einem gegenüberliegenden Ende 258 mit einem drehfesten Trägerrohr 260, welches sich - wie in Fig. 1 dargestellt - koaxial zur Drehachse 30 in Fortsetzung des Antriebsmotors 126 auf dessen dem Planetengetriebe 116 gegenüberliegender Seite erstreckt. An diesem Trägerrohr 260 sind ferner in Ebenen senkrecht zur Drehachse 30 verlaufende Führungsscheiben 262 in konstanten Abständen voneinander angeordnet, wobei der Versorgungsstrang 250 zwischen zwei derartigen Führungsscheiben 262 in horizontaler Richtung geführt ist. Ferner ist der Versorgungsstrang 250 noch in einem, in Fig. 6 und 7 dargestellten Schneckengehäuse 264 geführt, welches das Trägerrohr 260 umgibt, jedoch gemeinsam mit der Spindeltrommel 100 um die Achse 30 drehbar ist.

Bei Einsatz des Versorgungsstrangs 250 ist beispielsweise bei acht Spindelstationen 230a bis h, jeweils im Winkelabstand von 45° eine Drehung der Spindeltrommel 100 um einen maximalen Drehwinkel von 360°-45° erlaubt. Dreht sich die Spindeltrommel 100 von der in Fig. 6 dargestellten Ausgangsstellung beispielsweise in Richtung des Pfeils 266, so dreht sich in dieser Richtung das Ende 256 und das Gehäuse 264, wobei sich der Versorgungsstrang 250 spiralförmig um das Trägerrohr 260 mit dem fest mit diesem verbundenen Ende 258 aufwickelt und in einer Endstellung in der in Fig. 7 dargestellten Stellung steht. Dreht sich die Spindeltrommel 100 in Richtung des Pfeils 268 zurück, wie in Fig. 7 dargestellt, so wickelt sich der spiralförmig um das Trägerrohr 260 herumgewickelte Versorgungsstrang 250 wieder auf und steht nach der Drehung um 360° in der in Fig. 6 dargestellten Ausgangsstellung.

Durch ständiges Hin- und Herdrehen um den Maximalwinkel von 360°-45° besteht somit die Möglichkeit, über den flexiblen Versorgungsstrang 250 die Werkstückspindeln 140 ständig mit Energie und Steuerinformationen zu versorgen und zu überwachen, unabhängig davon, ob diese in einer Spindelstation stehen oder von einer Spindelstation zur nächsten bewegt werden.

Vorzugsweise arbeitet die erfindungsgemäße Mehrspindelwerkzeugmaschine so, daß sie einen Arbeitszyklus, beispielsweise mit einem Maximalwinkel von 360°-45° durchläuft, so daß beispielsweise die Werkstückspindeln 140a bei ihrer Drehbewegung längs des Pfeils 266 jede einzelne der Spindelstationen 230a bis 230h durchläuft, wobei entweder eine Bearbeitung oder ein Be- und Entladen oder beides erfolgt und letztlich die Werkstückspindel 140a wieder in der Spindelstation 230h steht.

Im Anschluß daran erfolgt ein schnelles Zurückdrehen um einen Winkel von 360°-45° so, daß die Werkstückspindel 140a wieder in der Spindelposition 230a steht, ohne daß jede einzelne der Spindelpositionen 230g bis 230b angefahren wurde oder in dieser eine Bearbeitung oder ein Be- und Entladen erfolgt ist.

Alternativ dazu ist es aber auch möglich, beim Zurückdrehen um 360° in Richtung des Pfeils 268 ebenfalls wieder jede einzelne der Spindelstationen 230g bis 230b anzufahren und in dieser ebenfalls eine Bearbeitung oder ein Be- und Entladen oder beides vorzunehmen.

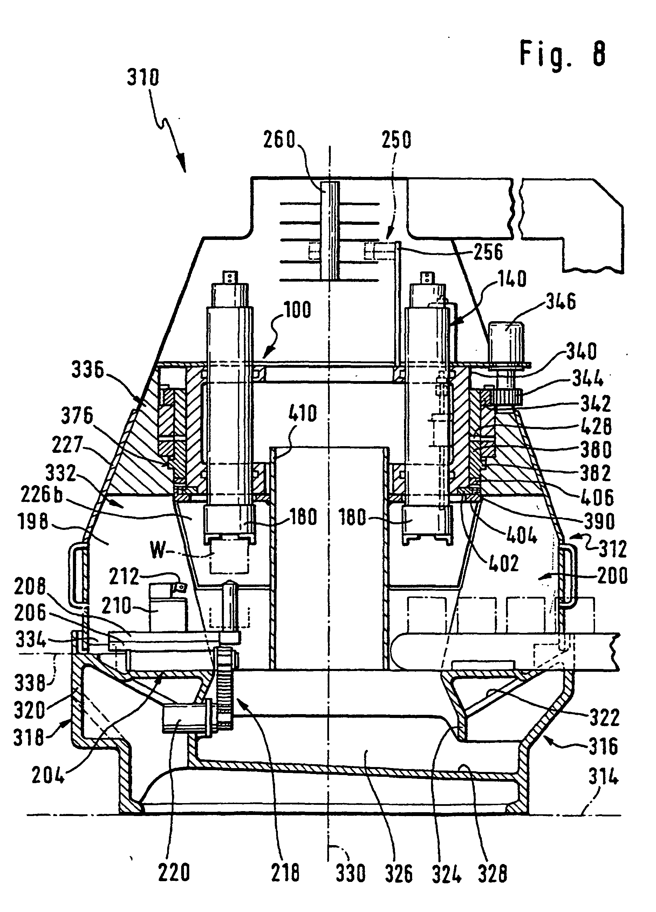

Ein zweites Ausführungsbeispiel einer erfindungsgemäßen Mehrspindelwerkzeugmaschine, in Fig. 8 als Ganzes mit 310 bezeichnet, umfaßt ein Maschinengestell 312, welches ein auf einer Grundfläche 314 stehendes Unterteil 316 aufweist.

Dieses Unterteil 316 weist seinerseits einen äußeren Ringkörper 318 mit einer zylindrischen Außenwand 320 sowie einer von dieser ausgehend schräg nach innen abfallenden Ablaufwand 322 auf. Die Ablaufwand 322 endet auf ihrer inneren, der Außenwand 320 abgewandten Seite mit einer inneren Ringwand 324, welcher eine Öffnung eines als Ganzes mit 326 bezeichneten Spänesumpfes umschließt, wobei der Spänesumpf einen in einer Querrichtung schräg verlaufenden Boden 328 aufweist.

Vorzugsweise ist der äußere Ringkörper 318 symmetrisch, insbesondere rotationssymmetrisch zu einer Mittelachse 330 ausgebildet, wobei die Mittelachse 330 senkrecht auf der Grundfläche 314 steht und diese durchstößt.

Ausgehend von dem Unterteil 316, insbesondere dem Ringkörper 318, erstrecken sich in den bereits im Zusammenhang mit dem ersten Ausführungsbeispiel beschriebenen Ebenen 224 liegende Tragwände 332 von einem auf dem Ringkörper 318 aufsitzenden Tragrandfuß 334 bis zu einem Tragring 336, an welchem die Spindeltrommel 100 um die Mittelachse 330 drehbar gelagert ist.

Die Tragwände 332 bilden dabei mit dem Tragring 336 ein einstückiges, auf das Unterteil 316 aufgesetztes und mit diesem verbundenes Teil des Maschinengestells 312, welches von dem Unterteil 316 durch eine Trennebene 338 getrennt ist.

Der Tragring 336 umgreift dabei die Spindeltrommel 100 im Bereich ihres Außenumfangs 340. An einem Außenumfang der Spindeltrommel 100 ist dabei ein Zahnkranz 342 vorgesehen, in welches ein Zahnritzel 344 eines am Tragring 336 gehaltenen Antriebs 346 eingreift, wobei dieser Antrieb 346 als numerisch gesteuerter Achsantrieb ausgebildet ist.

Ferner ist an dem Tragring 336 eine Hülse 380 vorgesehen, welche mit einem Ringkolben 382 in eine einen Zylinderraum bildende Ringnut 376 eingreift, so daß die Hülse 380 in gleicher Weise wie die Hülse 80 durch den Ringkolben 382 in gleicher Weise wie der Ringkolben 82 parallel zur Mittelachse 330 verschiebbar ist.

Ferner ist zur Positionierung der Spindeltrommel 100 ebenfalls eine dreiteilige Hirthverzahnung vorgesehen, welche einen an der Spindeltrommel fixierten Ring 402 aufweist, der eine der Hülse 380 zugewandte Verzahnung zeigt, sowie einen fest am Tragring 336 angeordneten Ring 404, welcher ebenfalls eine der Hülse 380 zugewandte Verzahnung aufweist, wobei zwischen beiden Ringen 402 und 404 ein Radiallager 390 vorgesehen ist, welches zur radialen Lagerung der Spindeltrommel 100 am Tragring 336 dient.

Darüber hinaus ist die Hülse 380 mit einem dritten Ring 406 versehen, welcher eine den Verzahnungen der Ringe 402 und 404 zugewandte Verzahnung aufweist, welche mit diese durch Bewegung der Hülse 380 in Eingriff bringbar ist.

Im Zusammenhang hierzu wird auf die detaillierte Beschreibung der Funktion der Hirthverzahnung, gebildet durch die Ringe 102, 104 und 106, im Zusammenwirken mit der Hülse 80 beim ersten Ausführungsbeispiel verwiesen.

Darüber hinaus ist zwischen der Hülse 380 und dem Zahnkranz 342 ein Axiallager 428 vorgesehen, welches in gleicher Weise wie das Axiallager 128 zum Anheben der gesamten Spindeltrommel 100 bei gelöster Hirthverzahnung dient, um - wie bereits im Zusammenhang mit dem ersten Ausführungsbeispiel beschrieben - die Ringe 402 und 404 reibungsfrei relativ zueinander zu drehen.

Zur Unterteilung des oberen Teilraums 198 des Arbeitsraums 200 erstrecken sich die Tragwände 332 von der äußeren Arbeitsraumabdeckung 227 bis zu den am Spindelträger 100 gehaltenen Späneschutzwandelementen 226b, so daß die Tragwände 332 gleichzeitig die Funktion der beim ersten Aus-führungsbeispiel beschriebenen Späneschutzwandelemente 226a übernehmen.

Ferner ist zur Begrenzung des Arbeitsraums 200 in Richtung der Mittelachse 330 ein Innenzylinder 410 vorgesehen, welcher als Schutz gegen die Verteilung von Kühlmittel und Spänen in den Teilräumen dient.

Im übrigen ist das zweite Ausführungsbeispiel in gleicher Weise ausgebildet wie das erste Ausführungsbeispiel, so daß bezüglich der Beschreibung der übrigen Teile auf die Ausführungen zum ersten Ausführungsbeispiel vollinhaltlich Bezug genommen wird.

## Patentansprüche

1. Mehrspindelwerkzeugmaschine umfassend ein sich über einer Grundfläche erhebendes Maschinengestell (12), einen am Maschinengestell um eine die Grundfläche durchstoßende und sich von dieser weg erstreckende Drehachse (30) drehbar gelagerten Spindelträger (100), mehrere an dem Spindelträger um die Drehachse herum jeweils einzeln in einzelnen Spindelposi-tionen hängend angeordnete Werkstückspindeln (140), deren Spindelachsen die Grundfläche durchstoßen und sich von dieser weg erstrecken und die durch Drehen des Spindelträgers um die Drehachse in verschiedenen Drehstellungen positionierbar sind, einen Arbeitsraum, in welchen die Werkstückspindeln mit ihren Werkstückspanneinrichtungen (180) hineinragen und ein in dem Arbeitsraum angeordnetes Werkzeug, mit welchem ein in der Werkstückspanneinrichtung einer der Werkstückspindeln gespanntes Werkstück (W) bearbeitbar ist,
**dadurch gekennzeichnet, daß** die Werkstückspindeln (140) in Richtung ihrer Spindelachse (148) relativ zum Spindelträger (100) linear und unabhängig voneinander bewegbar sind, daß die in Richtung ihrer Spindelachsen (148) verschiebbaren Werkstückspindeln (140) eine numerisch gesteuerte Z-Achse zur Bearbeitung des Werkstücks (W) bilden, daß die Werkstückspindeln (140) in einzelnen Spindelstationen (230) positionierbar sind und daß mindestens einer der Spindelstationen (230) ein am Maschinengestell (12) gehaltenes Werkzeug (212) zugeordnet ist.

2. Mehrspindelwerkzeugmaschine nach Anspruch 1, **dadurch gekennzeichnet, daß** die Werkstückspindeln (140) relativ zum Spindelträger (100) ausschließlich in Richtung ihrer Spindelachse (148) linear bewegbar sind.

3. Mehrspindelwerkzeugmaschine nach Anspruch 1 oder 2, **dadurch gekennzeichnet, daß** jeder Werkstückspindel (140) ein eigener Linearantrieb (154, 156, 162) zur Bewegung derselben in Richtung der Spindelachse (148) zugeordnet ist.

4. Mehrspindelwerkzeugmaschine nach Anspruch 3, **dadurch gekennzeichnet, daß** jede Werkstückspindel (140) ständig mit dem Linearantrieb (154, 156, 162) gekoppelt ist.

5. Mehrspindelwerkzeugmaschine nach Anspruch 3 oder 4, **dadurch gekennzeichnet, daß** jede Werkstückspindel (140) bezüglich ihrer Position in Richtung der Spindelachse (148) mittels des Linearantriebs (154, 156, 162) definiert positionierbar und fixierbar ist.

6. Mehrspindelwerkzeugmaschine nach Anspruch 5, **dadurch gekennzeichnet, daß** der Linearantrieb (154, 156, 162) an dem Spindelträger (100) sitzt.

7. Mehrspindelwerkzeugmaschine nach Anspruch 6, **dadurch gekennzeichnet, daß** ein Linearantrieb (154, 156, 162) an dem Spindelträger (100) bezogen auf die jeweilige Werkstückspindel (140) radial außen liegend angeordnet ist.

8. Mehrspindelwerkzeugmaschine nach Anspruch 6 oder 7, **dadurch gekennzeichnet, daß** der Linearantrieb (154, 156, 162) in einem Winkelbereich zwischen zwei aufeinanderfolgenden Werkstückspindeln (140) angeordnet ist.

9. Mehrspindelwerkzeugmaschine nach Anspruch 8, **dadurch gekennzeichnet, daß** der Linearantrieb (154, 156, 162) bezüglich zweier aufeinanderfolgender Werkstückspindeln (140) auf Lücke angeordnet ist.

10. Mehrspindelwerkzeugmaschine nach einem der voranstehenden Ansprüche, **dadurch gekennzeichnet, daß** jede Werkstückspindel (140) als Motorspindel ausgebildet ist.

11. Mehrspindelwerkzeugmaschine nach einem der voranstehenden Ansprüche **dadurch gekennzeichnet, daß** der Arbeitsraum (200) einen Bewegungsraum (198) für die Werkstückspindeln (140) umfaßt, welcher in sich geschlossen und durchgehend verläuft.

12. Mehrspindelwerkzeugmaschine nach einem der voranstehenden Ansprüche, **dadurch gekennzeichnet, daß** der Arbeitsraum (200) einen mindestens einer Spindelstation (230) zugeordneten Spanerzeugungsraum (201) umfaßt.

13. Mehrspindelwerkzeugmaschine nach einem der voranstehenden Ansprüche, **dadurch gekennzeichnet, daß** der Arbeitsraum (200) einen mindestens einer Spindelstation (230) zugeordneten Be- oder Entladeraum (202) oder einen einer Spindelstation zugeordneten Be- und Entladeraum (203) umfaßt.

14. Mehrspindelwerkzeugmaschine nach einem der voranstehenden Ansprüche, **dadurch gekennzeichnet, daß** zwischen dem jeder Spindelstation (230) zugeordneten Raum (201, 202, 203) eine Wand (36) angeordnet ist.

15. Mehrspindelwerkzeugmaschine nach einem der voranstehenden Ansprüche, **dadurch gekennzeichnet, daß** mindestens ein Teil der Spindelstation (230) als Bearbeitungsstationen ausgebildet ist.

16. Mehrspindelwerkzeugmaschine nach einem der voranstehenden Ansprüche, **dadurch gekennzeichnet, daß** mindestens ein Teil der Spindelstation (230) als Be- oder Entladestationen (202) oder als Be- und Entladestationen (203) ausgebildet ist.

17. Mehrspindelwerkzeugmaschine nach einem der voranstehenden Ansprüche, **dadurch gekennzeichnet, daß** der Spindelträger (100) von einer Ausgangsstellung um einen Maximalwinkel in einer Richtung (266) bis zu einer Endstellung und dann wieder in entgegengesetzter Richtung (268) zurück in die Ausgangsstellung drehbar ist und vom Maschinengestell (12) zum Spindelträger (100) ein flexibler Versorgungsstrang (250) geführt ist, welcher der Drehbewegung um den Maximalwinkel folgt.

18. Mehrspindelwerkzeugmaschine nach einem der voranstehenden Ansprüche , **dadurch gekennzeichnet, daß** das Maschinengestell (312) ein auf der Grundfläche (314) stehendes Unterteil (316) umfaßt, von welchem ausgehend sich in radial zur Drehachse (330) und durch diese hindurch verlaufenden Ebenen (224) liegende Tragelemente (332) erheben, die sich bis zu einem Tragring (336) erstrecken und diesen tragen, daß der Tragring den Spindelträger (100) lagert, daß die Werkstückspindein (140) in ihren Spindelpositionen um die Drehachse (330) herum angeordnet sind und daß radial innerhalb der Tragelemente (332) um die Drehachse (330) herum der Arbeitsraum (200) für die Bearbeitung der in den Werkstückspindeln (140) gehaltenen Werkstücke (W) angeordnet ist.

19. Mehrspindelwerkzeugmaschine nach Anspruch 18, **dadurch gekennzeichnet, daß** die Tragelemente (332) aus flächenhaft sich in den Ebenen (224) erstreckenden Körpern gebildet sind.

20. Mehrspindelwerkzeugmaschine nach Anspruch 18 oder 19, **dadurch gekennzeichnet, daß** die Tragelemente (332) sich ausgehend von einer Umlaufbahn der Werkstückspindeln (140) radial nach außen erstrecken.

21. Mehrspindelwerkzeugmaschine nach Anspruch 19 oder 20, **dadurch gekennzeichnet, daß** die Tragelemente als Tragwände (332) ausgebildet sind.

22. Mehrspindelwerkzeugmaschine nach einem der Ansprüche 18 bis 21, **dadurch gekennzeichnet, daß** der Arbeitsraum (200) eine der Zahl der Werkstückspindeln (140) entsprechende Zahl von Stationen (230) aufweist, in welchen die Werkstückspindeln (140) positionierbar sind und daß die Tragelemente (332) jeweils zwischen zwei aufein-anderfolgenden Stationen (230) angeordnet sind.

23. Mehrspindelwerkzeugmaschine nach einem der Ansprüche 18 bis 22, **dadurch gekennzeichnet, daß** die Tragelemente (332) in gleichen Winkelabständen voneinander angeordnet sind.

24. Mehrspindelwerkzeugmaschine nach einem der Ansprüche 18 bis 23, **dadurch gekennzeichnet, daß** mindestens drei Tragelemente (332) vorgesehen sind.

25. Mehrspindelwerkzeugmaschine nach einem der Ansprüche 18 bis 24, **dadurch gekennzeichnet, daß** zwischen jeweils zwei aufeinanderfolgenden Stationen (230) eines der Tragelemente (332) angeordnet ist.

26. Mehrspindelwerkzeugmaschine nach einem der Ansprüche 18 bis 25, **dadurch gekennzeichnet, daß** die Tragelemente (332) mit dem Tragring (336) sich freitragend über dem Unterteil (316) erheben.

27. Mehrspindelwerkzeugmaschine nach einem der Ansprüche 18 bis 26, **dadurch gekennzeichnet, daß** das Unterteil (316) einen radial sich bis zu den Tragelemente (332) erstreckenden und um die Drehachse (330) herum verlaufenden und sich auf der Grundfläche (314) abstützenden Außenkörper (318) umfaßt.

28. Mehrspindelwerkzeugmaschine nach Anspruch 27, **dadurch gekennzeichnet, daß** die Tragelemente (332) mit dem Außenkörper (318) verbunden sind.

29. Mehrspindelwerkzeugmaschine nach einem der voranstehenden Ansprüche, **dadurch gekennzeichnet, daß** der Spindelträger (100) über ein Lager (390) drehbar gelagert ist, welches radial außerhalb der von den Werkstückspindeln (140) beim Drehen des Spindelträgers (100) beschriebenen Bahnen liegt.

30. Mehrspindelwerkzeugmaschine nach Anspruch 29, **dadurch gekennzeichnet, daß** der Tragring (336) das Lager (390) für den Spindelträger (100) trägt.

31. Mehrspindelwerkzeugmaschine nach einem der Ansprüche 18 bis 30, **dadurch gekennzeichnet, daß** der Spindelträger (100) in einer Bearbeitungsstellung zur Bearbeitung der Werkstücke (W) ausschließlich von dem Tragring (336) getragen ist.

32. Mehrspindelwerkzeugmaschine nach einem der Ansprüche 18 bis 31, **dadurch gekennzeichnet, daß** ein Drehantrieb (346) für den Spindelträger (100) am Tragring (336) angeordnet ist.

33. Mehrspindelwerkzeugmaschine nach Anspruch 32, **dadurch gekennzeichnet, daß** der Drehantrieb (346) auf dem Tragring (336) angeordnet ist und sich über den Tragring (336) hinaus in Richtung der Drehachse (330) erstreckt.

34. Mehrspindelwerkzeugmaschine nach einem der Ansprüche 18 bis 33, **dadurch gekennzeichnet, daß** der Tragring (336) an dem Spindelträger (100) auf einer Außenumfangsseite (340) desselben angreift.

35. Mehrspindelwerkzeugmaschine nach einem der Ansprüche 18 bis 34, **dadurch gekennzeichnet, daß** der Tragring (336) den Spindelträger (100) auf seiner Außenumfangsseite (340) umgibt.

36. Mehrspindelwerkzeugmaschine nach einem der voranstehenden Ansprüche, **dadurch gekennzeichnet, daß** das Maschinengestell (12) ein auf der Grundfläche (14) stehendes Unterteil (16) umfaßt, von welchem ausgehend sich ein Ständer (32) erhebt, daß der Ständer (32) sich bis zum Spindelträger (100) erstreckt und diesen lagert, daß die Werkstückspindeln (140) in ihren Spindelpositionen um den Ständer (32) herum angeordnet sind und daß um den Ständer herum der Arbeitsraum (200) für die Bearbeitung der in den Werkstückspindeln (140) gehaltenen Werkstücke (W) angeordnet ist.

37. Mehrspindelwerkzeugmaschine nach Anspruch 36, **dadurch gekennzeichnet, daß** die Drehachse (30) des Spindelträgers (100) den Ständer (32) durchsetzt.

38. Mehrspindelwerkzeugmaschine nach Anspruch 37, **dadurch gekennzeichnet, daß** der Ständer (32) symmetrisch zur Drehachse (30) ausgebildet ist.

39. Mehrspindelwerkzeugmaschine nach einem der voranstehenden Ansprüche, **dadurch gekennzeichnet, daß** der Ständer (32) als Hohlkörper ausgebildet ist.

40. Mehrspindelwerkzeugmaschine nach einem der voranstehenden Ansprüche, **dadurch gekennzeichnet, daß** der Ständer (32) Versteifungsrippen (52) aufweist.

41. Mehrspindelwerkzeugmaschine nach einem der voranstehenden Ansprüche, **dadurch gekennzeichnet, daß** der Ständer (32) mit einem Ständeroberteil (40) sich freitragend über dem Unterteil (16) erhebt.

42. Mehrspindelwerkzeugmaschine nach einem der voranstehenden Ansprüche, **dadurch gekennzeichnet, daß** das Unterteil (16) einen radial außerhalb des Ständers (32) und um diesen herum verlaufenden und sich auf der Grundfläche (14) abstützenden Außenkörper (18) umfaßt.

43. Mehrspindelwerkzeugmaschine nach Anspruch 42, **dadurch gekennzeichnet, daß** ein Ständerfuß (34) des Ständers (32) mit dem Außenkörper (18) verbunden ist.

44. Mehrspindelwerkzeugmaschine nach Anspruch 43, **dadurch gekennzeichnet, daß** der Ständerfuß (34) mit dem Außenkörper (18) über radial zur Drehachse (30) verlaufende Stützelemente (36) verbunden ist.

45. Mehrspindelwerkzeugmaschine nach einem der voranstehenden Ansprüche, **dadurch gekennzeichnet, daß** ein Ständerfuß (34) mit dem Unterteil (16) ein einstückiges Teil bildet.

46. Mehrspindelwerkzeugmaschine nach einem der voranstehenden Ansprüche, **dadurch gekennzeichnet, daß** der Spindelträger (100) über ein Lager (90) drehbar gelagert ist, welches radial innerhalb der von den Werkstückspindeln (140) beim Drehen des Spindelträgers (100) beschriebenen Bahnen liegt.

47. Mehrspindelwerkzeugmaschine nach Anspruch 46, **dadurch gekennzeichnet, daß** der Ständer (32) das Drehlager (80, 90) für den Spindelträger (100) trägt.

48. Mehrspindelwerkzeugmaschine nach einem der voranstehenden Ansprüche, **dadurch gekennzeichnet, daß** der Spindelträger (100) in einer Bearbeitungsstellung zur Bearbeitung der Werkstücke (W) ausschließlich von dem Ständer (32) getragen ist.

49. Mehrspindelwerkzeugmaschine nach einem der voranstehenden Ansprüche, **dadurch gekennzeichnet, daß** ein Drehantrieb (116, 126) für den Spindelträger (100) am Ständer (32) angeordnet ist.

50. Mehrspindelwerkzeugmaschine nach Anspruch 49, **dadurch gekennzeichnet, daß** der Drehantrieb (116, 126) an einem Ständerkopf (42) des Ständers (32) angeordnet ist.

51. Mehrspindelwerkzeugmaschine nach Anspruch 50, **dadurch gekennzeichnet, daß** der Drehantrieb (116, 126) auf dem Ständerkopf (42) angeordnet ist und sich über den Ständerkopf (42) hinaus in Richtung der Drehachse (30) erstreckt.

52. Mehrspindelwerkzeugmaschine nach einem der voranstehenden Ansprüche, **dadurch gekennzeichnet, daß** das Unterteil (16) einen Werkzeugträger (210) für das Werkzeug (212) trägt.

53. Mehrspindelwerkzeugmaschine nach Anspruch 52, **dadurch gekennzeichnet, daß** der Werkzeugträger (210) am Außenkörper (18) des Unterteils (16) angeordnet ist.

54. Mehrspindelwerkzeugmaschine nach einem der voranstehenden Ansprüche, **dadurch gekennzeichnet, daß** das Werkzeug (212) radial zur Spindelachse (148) der jeweiligen Werkstückspindel (140) bewegbar ist.

55. Mehrspindelwerkzeugmaschine nach Anspruch 54, **dadurch gekennzeichnet, daß** das Werkzeug (212) durch eine NC-gesteuerte X-Achse radial zur Spindelachse (140) bewegbar und positionierbar ist.

56. Mehrspindelwerkzeugmaschine nach einem der voranstehenden Ansprüche, **dadurch gekennzeichnet, daß** der Arbeitsraum (200) von seiner dem Ständer (32) abgewandten Außenseite her ungehindert durch vom Spindelträger (100) zum Unterteil (16) hin verlaufende und den Spindelträger (100) lagernde Elemente zugänglich ist.

57. Mehrspindelwerkzeugmaschine nach einem der voranstehenden Ansprüche, **dadurch gekennzeichnet, daß** der Arbeitsraum (200) von seiner dem Ständer (32) abgewandten Außenseite her ungehindert durch zum Unterteil (16) hin verlaufende und den Ständer (32) gegenüber dem Unterteil versteifende Elemente zugänglich ist.

## Claims

1. A multiple-spindle machine tool comprising a machine frame (12) which rises above a base, a spindle support (100) mounted on the machine frame to rotate about a rotational axis (30) passing through the base and extending away therefrom, a plurality of work piece spindles (140) arranged on the spindle support around the rotational axis each suspended in individual spindle positions, the spindle axes of said work piece spindles passing through the base and extending away from it, and said work piece spindles may be positioned in various rotational positions by rotating the spindle support around the rotational axis, a work area, in which the work piece spindles protrude with their work piece clamping means (180), and a tool arranged in the working area with which a work piece (W) clamped in the work piece clamping means of one of the work piece spindles (140) can be machined, **characterized in that** the work piece spindles (140) are linearly movable independently of each other relative to the spindle support (100) in the direction of their spindle axis (148), **in that** the work piece spindles (140) displaceable in the direction of their spindle axes (148) form a numerically controlled Z axis for machining the work piece (W), **in that** the work piece spindles (140) can be positioned in individual spindle stations (230) and **in that** a tool (212) held on the machine frame (12) is allocated to at least one of the spindle stations (230).

2. A multiple-spindle machine tool according to Claim 1, **characterised in that** the work piece spindles (140) are movable linearly relative to the spindle support (100) solely in the direction of their spindle axis (148).

3. A multiple-spindle machine tool according to Claim 1 or 2, **characterised in that** each work piece spindle (140) is equipped with its own linear drive (154, 156, 162) to move it in the direction of the spindle axis (148).

4. A multiple-spindle machine tool according to Claim 3, **characterised in that** each work piece spindle (140) is constantly coupled to the linear drive (154, 156, 162).

5. A multiple-spindle machine tool according to Claim 3 or 4, **characterised in that** each work piece spindle (140) can be positioned and fixed in a defined manner with regard to its position in the direction of the spindle axis (148) by means of the linear drive (154, 156, 162).

6. A multiple-spindle machine tool according to claim 5, **characterised in that** the linear drive (154, 156, 162) sits on the spindle support (100).

7. A multiple-spindle machine tool according to Claim 6, **characterised in that** a linear drive (154, 156, 162) is arranged on the spindle support (100) to lie radially on the outside in relation to the respective work piece spindle (140).

8. A multiple-spindle machine tool according to Claim 6 or 7, **characterised in that** the linear drive (154, 156, 162) is arranged in an angular region between two consecutive work piece spindles (140).

9. A multiple-spindle machine tool according to Claim 8, **characterised in that** the linear drive (154, 156, 162) occupies the gap between two consecutive work piece spindles (140).

10. A multiple-spindle machine tool according to any one of the preceding claims, **characterised in that** each work piece spindle (140) is constructed as a motor spindle.

11. A multiple-spindle machine tool according to any one of the preceding claims, **characterised in that** the working area (200) comprises an area for movement (198) of the work piece spindles (140) which is enclosed and extends continuously.

12. A multiple-spindle machine tool according to any one of the preceding claims, **characterised in that** the working area (200) comprises a chip forming area (201) allocated to at least one spindle station (230).

13. A multiple-spindle machine tool according to any one of the preceding claims, **characterised in that** the working area (200) comprises a loading and unloading area (202) allocated to at least one spindle station (230) or a loading and unloading area (203) allocated to one spindle station.

14. A multiple-spindle machine tool according to any one of the preceding claims, **characterised in that** a wall (36) is arranged between the area (201, 202, 203) allocated to each spindle station (230).

15. A multiple-spindle machine tool according to any one of the preceding claims, **characterised in that** at least part of the spindle station (230) is constructed as a machining station.

16. A multiple-spindle machine tool according to any one of the preceding claims, **characterised in that** at least part of the spindle station (230) is constructed as loading or unloading stations (202) or as loading and unloading stations (203).

17. A multiple-spindle machine tool according to any one of the preceding claims, **characterised in that** the spindle support (100) may be rotated from a starting position about a maximum angle in one direction (266) as far as an end position and then in the opposite direction (268) back into the starting position again, and a flexible supply assembly (250) following the rotational movement around the maximum angle is guided from the machine frame (12) to the spindle support (100).

18. A multiple-spindle machine tool according to any one of the preceding claims, **characterized in that** the machine frame (312) comprises a bottom part (316) standing on the base (314), and starting from the bottom part (316) support elements (332) lying in planes (224) running radially to the rotational axis (330) and running through this extend upwards, said support elements extending as far as the support ring (336) and supporting this, **in that** the support ring (336) supports the spindle support (100), **in that** the work piece spindles (140) are arranged in their spindle positions around the rotational axis (330),and **in that** the working area (200) for machining the work pieces (W) held in the work piece spindles (140) is arranged radially inside the support elements (332) around the rotational axis (330).

19. A multiple-spindle machine according to Claim 18, **characterised in that** the support elements (332) are formed from flat parts extending in the planes (224).

20. A multiple-spindle machine according to Claim 18 or 19, **characterised in that** the support elements (332) extend radially outwards from a circular path of the work piece spindles (140).

21. A multiple-spindle machine according to Claim 19 or 20, **characterised in that** the support elements are constructed as supporting walls (332).

22. A multiple-spindle machine according to any one of claims 18 to 21, **characterised in that** the number of stations (230) in the working area (200) in which the work piece spindles (140) may be positioned corresponds to the number of work piece spindles (140), and **in that** the support elements (332) are respectively arranged between two consecutive stations (230).

23. A multiple-spindle machine according to any one of claims 18 to 22, **characterised in that** the support elements (332) are spaced at equal angular distances from one another.

24. A multiple-spindle machine according to any one of claims 18 to 23, **characterized in that** at least three support elements (332) are provided.

25. A multiple-spindle machine according to any one of claims 18 to 24, **characterised in that** one of the support elements (332) is arranged between each two consecutive stations (230).

26. A multiple-spindle machine according to any one of claims 18 to 25, **characterised in that** the support elements (332) with the support ring (336) extend upwards above the bottom part (316) unsupported.

27. A multiple-spindle machine according to any one of claims 18 to 26, **characterised in that** the bottom part (316) comprises an external part (318), which extends radially as far as the support elements (332), runs around the rotational axis (330) and is supported on the base (314).

28. A multiple-spindle machine according to Claim 27, **characterised in that** the support elements (332) are connected to the external part (318).

29. A multiple-spindle machine according to any one of the preceding Claims, **characterised in that** the spindle support (100) is rotatably mounted by means of a bearing (390) which lies radially outside the paths the work piece spindles (140) follow during rotation of the spindle support (100).

30. A multiple-spindle machine according to Claim 29, **characterised in that** the support ring (336) supports the bearing (390) for the spindle support (100).

31. A multiple-spindle machine according to any one of claims 18 to 30, **characterised in that** the spindle support (100) is supported solely by the support ring (336) in a machining position for machining the work pieces (W).

32. A multiple-spindle machine according to any one of claims 18 to 31, **characterised in that** a rotary drive (346) for the spindle support (100) is arranged on the support ring (336).

33. A multiple-spindle machine according to Claim 32, **characterised in that** the rotary drive (346) is arranged on the support ring (336) and extends beyond the support ring (336) in the direction of the rotational axis (330).

34. A multiple-spindle machine according to any one of claims 18 to 33, **characterised in that** the support ring (332) engages on the spindle support (100) on a side on its outer periphery (340).

35. A multiple-spindle machine according to any one of claims 18 to 34, **characterised in that** the support ring (336) surrounds the spindle support (100) on the side of its outer periphery (340).

36. A multiple-spindle machine tool according to any one of the preceding claims, **characterized in that** the machine frame (12) comprises a bottom part (16) standing on the base (14) and a stand (32) extends upwards starting from the bottom part, **in that** the stand extends up to and constitutes a bearing for the spindle support (100), **in that** the work piece spindles (140) are arranged in their spindle positions around the stand (32), and **in that** the working area (200) for machining the work pieces (W) held in the work piece spindles (140) is arranged around the stand.

37. A multiple-spindle machine tool according to claim 36, **characterized in that** the rotational axis (30) of the spindle support (100) passes through the stand (32).

38. A multiple-spindle machine tool according to claim 37, **characterized in that** the stand (32) is formed symmetrically to the rotational axis (30).

39. A multiple-spindle machine tool according to any one of the preceding claims, **characterized in that** the stand (32) is formed as a hollow body.

40. A multiple-spindle machine tool according to any one of the preceding claims **characterized in that** the stand (32) comprises reinforcing ribs (52).

41. A multiple-spindle machine tool according to any one of the preceding claims, **characterized in that** an upper part (40) of the stand (32) extends unsupported over the bottom part (16).

42. A multiple-spindle machine tool according to any one of the preceding claims, **characterized in that** the bottom part (16) comprises an outer body (18) extending radially outwardly of the stand (32) and extending therearound and supported on the base (14).

43. A multiple-spindle machine tool according to claim 42, **characterized in that** a foot (34) of the stand (32) is connected to the outer body (18).

44. A multiple-spindle machine tool of claim 43 **characterised in that** the stand foot (34) is connected to the outer body (18) by means of support elements extending radially of the rotational axis (30).

45. A multiple-spindle machine tool according to any one of the preceding claims, **characterized in that** a stand foot (34) forms an integral part with the bottom part (16).

46. A multiple-spindle machine tool to any one of the preceding claims, **characterized in that** the spindle support (100) is rotatably carried by a bearing (90), which lies radially inwardly of the paths described by the work piece spindles (140) upon rotation of the spindle support (100).

47. A multiple-spindle machine tool according to claim 46, **characterized in that** the stand (32) carries the rotary bearing (80,90) for the spindle support (100).

48. A multiple-spindle machine tool according to any one of the preceding claims, **characterized in that** the spindle support (100) is supported solely by the stand (32) in a machining position for machining the work pieces (W).

49. A multiple-spindle machine tool according to any one of the preceding claims **characterized in that** a rotary drive (116,126) for the spindle support is arranged on the stand (32).

50. A multiple-spindle machine tool according to claim 49, **characterized** the rotary drive (116,126) arranged on a head (42) of the stand (32).

51. A multiple-spindle machine tool according to claim 50, **characterized in that** the rotary drive (116,126) is arranged on the stand head (42) and extends beyond the stand head (42) in the direction of the rotational axis (30).

52. A multiple-spindle machine tool according to any one of the preceding claims, **characterized in that** the bottom part (16) holds a tool support (210) for the tool (212).

53. A multiple-spindle machine tool according to claim 52, **characterized in that** the tool support (210) is arranged on the external part (18) of the bottom part (16).

54. A multiple-spindle machine tool according to any one of the preceding claims, **characterized in that** the tool (212) can be moved radially to the spindle axis (148) of the respective work piece spindle (140).

55. A multiple-spindle machine tool according to claim 54, **characterized in that** the tool (212) may be moved and positioned radially to the spindle axis (140) by a numerically controlled X axis.

56. A multiple-spindle machine tool according to any one of the present claims, **characterized in that** the working area (200) is accessible from its outer side remote from the stand (32) unhindered by elements extending from the spindle support (100) to the bottom part (16) and carrying the spindle support (100).

57. A multiple-spindle machine tool according to any one of the preceding claims **characterized in that** the working area (200) is accessible from its outer side remote from the stand (32) unhindered by elements from claim 56 extending to the bottom part (16) and reinforcing the stand (32) with respect to the bottom part.

## Revendications

1. Machine-outil multibroche comprenant un bâti de machine (12) s'élevant au-dessus d'une surface de base, un porte-broche (100) monté en rotation sur le bâti de la machine autour d'un axe de rotation (30) traversant la surface de base et s'étendant en s'éloignant de celle-ci, plusieurs broches porte-pièces (140) disposées sur le porte-broche tout autour de l'axe de rotation, à chaque fois suspendues individuellement dans des positions individuelles de broches, broches porte-pièces dont les axes de broches traversent la surface de base et s'étendent en s'éloignant de celle-ci, et qui sont positionnables dans différentes positions de rotation, par rotation du porte-broche autour de l'axe de rotation, un espace de travail dans lequel les broches porte-pièces pénètrent avec leurs dispositifs de serrage des pièces d'usinage (180), et un outil disposé dans l'espace de travail, outil avec lequel peut être usinée une pièce d'usinage (W) serrée dans le dispositif de serrage des pièces d'usinage de l'une des broches porte-pièces, **caractérisée en ce que** les broches porte-pièces (140), en direction de leur axe de broche (148), sont mobiles linéairement et indépendamment les unes des autres, par rapport au porte-broche (100), **en ce que** les broches porte-pièces (140) mobiles en direction de leurs axes de broches (148) forment, pour l'usinage de la pièce d'usinage (W), un axe Z commandé numériquement, **en ce que** les broches porte-pièces (140) sont positionnables dans différents postes à broches (230) et **en ce qu'**au moins un outil (212) maintenu sur le bâti de machine (12) est affecté à l'un des postes à broches (230).

2. Machine-outil multibroche selon la revendication 1, **caractérisée en ce que** les broches porte-pièces (140) sont mobiles linéairement, exclusivement en direction de leur axe de broche (148), par rapport au porte-broche (100).

3. Machine-outil multibroche selon la revendication 1 ou 2, **caractérisée en ce qu'**un propre moyen d'entraînement linéaire (154, 156, 162) est affecté à chaque broche porte-pièce (140), pour le déplacement de celle-ci en direction de l'axe de broche (148).

4. Machine-outil multibroche selon la revendication 3, **caractérisée en ce que** chaque broche porte-pièce (140) est accouplée constamment au moyen d'entraînement linéaire (154, 156, 162).

5. Machine-outil multibroche selon la revendication 3 ou 4, **caractérisée en ce que** chaque broche porte-pièce (140), concernant sa position en direction de l'axe de broche (148), peut être positionnée et fixée de façon définie à l'aide du moyen d'entraînement linéaire (154, 156, 162).

6. Machine-outil multibroche selon la revendication 5, **caractérisée en ce que** le moyen d'entraînement linéaire (154, 156, 162) est monté sur le porte-broche (100).

7. Machine-outil multibroche selon la revendication 6, **caractérisée en ce qu'**un moyen d'entraînement linéaire (154, 156, 162), monté sur le porte-broche (100), est disposé en étant à l'extérieur radialement, par rapport à la broche porte-pièce respective (140).

8. Machine-outil multibroche selon la revendication 6 ou 7, **caractérisée en ce que** le moyen d'entraînement linéaire (154, 156, 162) est disposé suivant une plage angulaire comprise entre deux broches porte-pièces (140) qui se suivent.

9. Machine-outil multibroche selon la revendication 8, **caractérisée en ce que** le moyen d'entraînement linéaire (154, 156, 162) est disposé dans un intervalle concernant deux broches porte-pièces (140) qui se suivent.

10. Machine-outil multibroche selon l'une quelconque des revendications précédentes, **caractérisée en ce que** chaque broche porte-pièce (140) est conçue comme une motobroche.

11. Machine-outil multibroche selon l'une quelconque des revendications précédentes, **caractérisée en ce que** l'espace de travail (200) comprend un espace de déplacement (198) pour les broches porte-pièces (140), lequel espace de déplacement s'étend en soi de façon fermée et continue.

12. Machine-outil multibroche selon l'une quelconque des revendications précédentes, **caractérisée en ce que** l'espace de travail (200) comprend un espace de production de copeaux (201) affecté à au moins un poste à broches (230).

13. Machine-outil multibroche selon l'une quelconque des revendications précédentes, **caractérisée en ce que** l'espace de travail (200) comprend un espace de chargement ou de déchargement (202) affecté à au moins un poste à broches (230) ou un espace de chargement et de déchargement (203) affecté à un poste à broches.

14. Machine-outil multibroche selon l'une quelconque des revendications précédentes, **caractérisée en ce qu'**une paroi (36) est disposée entre l'espace (201, 202, 203) affecté à chaque poste à broches (230).

15. Machine-outil multibroche selon l'une quelconque des revendications précédentes, **caractérisée en ce qu'**au moins une partie du poste à broches (230) est configurée comme des postes d'usinage.

16. Machine-outil multibroche selon l'une quelconque des revendications précédentes, **caractérisée en ce qu'**au moins une partie du poste à broches (230) est configurée comme des postes de chargement ou de déchargement (202) ou comme des postes de chargement et de déchargement (203).

17. Machine-outil multibroche selon l'une quelconque des revendications précédentes, **caractérisée en ce que** le porte-broche (100), à partir d'une position initiale, est mobile en rotation autour d'un angle maximum dans une direction (266) jusqu'à une position finale, puis, à nouveau, dans la direction opposée (268), revient dans la position initiale, une ligne d'alimentation flexible (250) étant guidée à partir du bâti de machine (12) jusqu'au porte-broche (100), laquelle ligne d'alimentation suit le mouvement de rotation autour de l'angle maximum.

18. Machine-outil multibroche selon l'une quelconque des revendications précédentes, **caractérisée en ce que** le bâti de machine (312) comprend une partie inférieure (316) se tenant sur la surface de base (314), partie inférieure à partir de laquelle s'élèvent des éléments porteurs (332) en se trouvant dans des plans (224) s'étendant radialement par rapport à l'axe de rotation (330) et le traversant, lesquels éléments porteurs s'étendent jusqu'à un anneau porteur (336) et le supportent, **en ce que** l'anneau porteur (336) loge le porte-broche (100), **en ce que** les broches porte-pièces (140) sont disposées dans leurs positions de broches tout autour de l'axe de rotation (330) et **en ce que** l'espace de travail (200), servant à l'usinage des pièces d'usinage (W) maintenues dans les broches porte-pièces (140), est disposé radialement à l'intérieur des éléments porteurs (332), tout autour de l'axe de rotation (330).

19. Machine-outil multibroche selon la revendication 18, **caractérisée en ce que** les éléments porteurs (332) sont formés par des corps s'étendant en surface dans les plans (224).

20. Machine-outil multibroche selon la revendication 18 ou 19, **caractérisée en ce que** les éléments porteurs (332) s'étendent vers l'extérieur radialement, à partir d'une trajectoire circulaire des broches porte-pièces (140).

21. Machine-outil multibroche selon la revendication 19 ou 20, **caractérisée en ce que** les éléments porteurs sont configurés comme des parois portantes (332).

22. Machine-outil multibroche selon l'une quelconque des revendications 18 à 21, **caractérisée en ce que** l'espace de travail (200) comprend un nombre de postes (230) correspondant au nombre de broches porte-pièces (140), postes dans lesquels les broches porte-pièces (140) sont positionnables, et **en ce que** les éléments porteurs (332) sont disposés à chaque fois entre deux postes (230) qui se suivent.

23. Machine-outil multibroche selon l'une quelconque des revendications 18 à 22, **caractérisée en ce que** les éléments porteurs (332) sont disposés en étant séparés les uns des autres par des distances angulaires identiques.

24. Machine-outil multibroche selon l'une quelconque des revendications 18 à 23, **caractérisée en ce qu'**il est prévu au moins trois éléments porteurs (332).

25. Machine-outil multibroche selon l'une quelconque des revendications 18 à 24, **caractérisée en ce que** l'un des éléments porteurs (332) est disposé à chaque fois entre deux postes (230) qui se suivent.

26. Machine-outil multibroche selon l'une quelconque des revendications 18 à 25, **caractérisée en ce que** les éléments porteurs (332), avec l'anneau porteur (336), s'élèvent en porte-à-faux au-dessus de la partie inférieure (316).

27. Machine-outil multibroche selon l'une quelconque des revendications 18 à 26, **caractérisée en ce que** la partie inférieure (316) comprend un corps extérieur (318) s'étendant radialement jusqu'aux éléments porteurs (332), s'étendant tout autour de l'axe de rotation (330) et s'appuyant sur la surface de base (314).

28. Machine-outil multibroche selon la revendication 27, **caractérisée en ce que** les éléments porteurs (332) sont reliés au corps extérieur (318).

29. Machine-outil multibroche selon l'une quelconque des revendications précédentes, **caractérisée en ce que** le porte-broche (100) est monté en rotation sur un palier (390) qui se trouve radialement à l'extérieur des trajectoires décrites par les broches porte-pièces (140) lors de la rotation du porte-broche (100).

30. Machine-outil multibroche selon la revendication 29, **caractérisée en ce que** l'anneau porteur (336) supporte le palier (390) du porte-broche (100).

31. Machine-outil multibroche selon l'une quelconque des revendications 18 à 30, **caractérisée en ce que** le porte-broche (100), dans une position de travail pour l'usinage des pièces d'usinage (W), est supporté exclusivement par l'anneau porteur (336).

32. Machine-outil multibroche selon l'une quelconque des revendications 18 à 31, **caractérisée en ce qu'**un moyen d'entraînement rotatif (346) du porte-broche (100) est disposé sur l'anneau porteur (336).

33. Machine-outil multibroche selon la revendication 32, **caractérisée en ce que** le moyen d'entraînement rotatif (346) est disposé sur l'anneau porteur (336) et s'étend au-delà de l'anneau porteur (336), en direction de l'axe de rotation (330).

34. Machine-outil multibroche selon l'une quelconque des revendications 18 à 33, **caractérisée en ce que** l'anneau porteur (336) s'applique sur le porte-broche (100), sur une circonférence extérieure (340) de ce même porte-broche.

35. Machine-outil multibroche selon l'une quelconque des revendications 18 à 34, **caractérisée en ce que** l'anneau porteur (336) entoure le porte-broche (100) sur sa circonférence extérieure (340).

36. Machine-outil multibroche selon l'une quelconque des revendications précédentes, **caractérisée en ce que** le bâti de machine (12) comprend une partie inférieure (16) se tenant sur la surface de base (14), partie inférieure à partir de laquelle s'élève un montant (32), **en ce que** le montant (32) s'étend jusqu'au porte-broche (100) et loge celui-ci, **en ce que** les broches porte-pièces (140) sont disposées, dans leurs postes à broches, tout autour du montant (32), et **en ce que** l'espace de travail (200) servant à l'usinage des pièces d'usinage (W) maintenues dans les broches porte-pièces (140) est disposé tout autour du montant (32).

37. Machine-outil multibroche selon la revendication 36, **caractérisée en ce que** l'axe de rotation (30) du porte-broche (100) traverse le montant (32).

38. Machine-outil multibroche selon la revendication 37, **caractérisée en ce que** le montant (32) est configuré de façon symétrique par rapport à l'axe de rotation (30).

39. Machine-outil multibroche selon l'une quelconque des revendications précédentes, **caractérisée en ce que** le montant (32) est conformé comme un corps creux.

40. Machine-outil multibroche selon l'une quelconque des revendications précédentes, **caractérisée en ce que** le montant (32) présente des nervures de renfort (52).

41. Machine-outil multibroche selon l'une quelconque des revendications précédentes, **caractérisée en ce que** le montant (32), par une partie supérieure (40) du montant, s'élève en porte-à-faux au-dessus de la partie inférieure (16).

42. Machine-outil multibroche selon l'une quelconque des revendications précédentes, **caractérisée en ce que** la partie inférieure (16) comprend un corps extérieur (18) s'étendant à l'extérieur du montant (32), dans le sens radial, et autour de ce montant, et venant en appui sur la surface de base (14).

43. Machine-outil multibroche selon la revendication 42, **caractérisée en ce qu'**un pied (34) du montant (32) est relié au corps extérieur (18).

44. Machine-outil multibroche selon la revendication 43, **caractérisée en ce que** le pied (34) du montant est relié au corps extérieur (18) par des éléments supports (36) s'étendant radialement par rapport à l'axe de rotation (30).

45. Machine-outil multibroche selon l'une quelconque des revendications précédentes, **caractérisée en ce qu'**un pied (34) du montant forme, avec la partie inférieure (16), une pièce d'un seul tenant.

46. Machine-outil multibroche selon l'une quelconque des revendications précédentes, **caractérisée en ce que** le porte-broche (100) est monté en rotation sur un palier (90) qui se trouve radialement à l'intérieur des trajectoires décrites par les broches porte-pièces (140), lors de la rotation du porte-broche (100).

47. Machine-outil multibroche selon la revendication 46, **caractérisée en ce que** le montant (32) supporte le palier de rotation (80, 90) du porte-broche (100).

48. Machine-outil multibroche selon l'une quelconque des revendications précédentes, **caractérisée en ce que** le porte-broche (100), dans une position de travail pour l'usinage des pièces d'usinage (W), est supporté exclusivement par le montant (32).

49. Machine-outil multibroche selon l'une quelconque des revendications précédentes, **caractérisée en ce qu'**un moyen d'entraînement rotatif (116, 126) du porte-broche (100) est disposé sur le montant (32).

50. Machine-outil multibroche selon la revendication 49, **caractérisée en ce que** le moyen d'entraînement rotatif (116, 126) est disposé sur une tête (42) du montant (32).

51. Machine-outil multibroche selon la revendication 50, **caractérisée en ce que** le moyen d'entraînement rotatif (116, 126) est disposé sur la tête (42) du montant et s'étend au-delà de la tête (42) du montant, en direction de l'axe de rotation (30).

52. Machine-outil multibroche selon l'une quelconque des revendications précédentes, **caractérisée en ce que** la partie inférieure (16) supporte un porte-outil (210) pour l'outil (212).

53. Machine-outil multibroche selon la revendication 52, **caractérisée en ce que** le porte-outil (210) est disposé sur le corps extérieur (18) de la partie inférieure (16).

54. Machine-outil multibroche selon l'une quelconque des revendications précédentes, **caractérisée en ce que** l'outil (212) est mobile radialement par rapport à l'axe (148) de la broche porte-pièce respective (140).

55. Machine-outil multibroche selon la revendication 54, **caractérisée en ce que** l'outil (212) est mobile et positionnable radialement par rapport à l'axe de broche (140), à travers un axe X contrôlé par une commande numérique.

56. Machine-outil multibroche selon l'une quelconque des revendications précédentes, **caractérisée en ce que** l'espace de travail (200) est accessible par son côté extérieur placé à l'opposé du montant (32), sans être entravé par des éléments s'étendant depuis le porte-broche (100) jusqu'à la partie inférieure (16) et logeant le porte-broche (100).

57. Machine-outil multibroche selon l'une quelconque des revendications précédentes, **caractérisée en ce que** l'espace de travail (200) est accessible par son côté extérieur placé à l'opposé du montant (32), sans être entravé par des éléments s'étendant jusqu'à la partie inférieure (16) et renforçant le montant (32) par rapport à la partie inférieure.
